(19) Europäisches Patentamt
European Patent Office
Office européen des brevets

(11) EP 1 808 451 A1

(12) # EUROPEAN PATENT APPLICATION

(43) Date of publication:
**18.07.2007 Bulletin 2007/29**

(21) Application number: **07250107.5**

(22) Date of filing: **11.01.2007**

(51) Int Cl.:
*C08G 81/00 (2006.01)* *C08G 83/00 (2006.01)*
*C01B 31/02 (2006.01)* *C08G 69/32 (2006.01)*

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **12.01.2006 US 331291**

(71) Applicant: **WILLIAM MARSH RICE UNIVERSITY**
**Houston, TX 77005 (US)**

(72) Inventors:
- **Hwang, Wen-Fang**
  **Midland, MI 48642 (US)**
- **Hauge, Robert H.**
  **Houston, TX 77025 (US)**
- **Tour, James M**
  **Bellaire, TX 77401 (US)**
- **Kobashi, Kazufumi**
  **Houston, TX 77025 (US)**
- **Chen, Zheyi**
  **Houston, TX 77096 (US)**

(74) Representative: **Harrison Goddard Foote**
**Belgrave Hall**
**Belgrave Street**
**Leeds LS2 8DD (GB)**

(54) **Copolymerization and copolymers of aromatic polymers with carbon nanotubes and products made therefrom**

(57) The present invention is generally directed to the block copolymerization of aromatic polymers with carbon nanotubes (CNTs), the CNTs typically being shortened, to form nanotube block copolymers. The present invention is also directed to fibers and other shaped articles made from the nanotube block copolymers of the present invention.

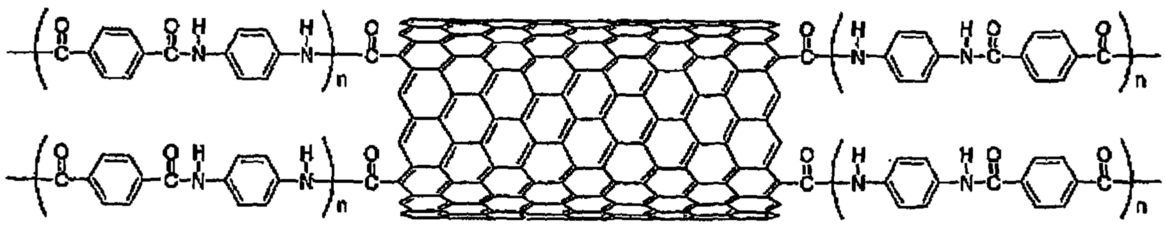

*Fig. 2*

EP 1 808 451 A1

## Description

FIELD OF THE INVENTION

The present invention relates generally to carbon nanotube materials. More specifically, the invention relates to block copolymers comprising aromatic polymer blocks and short carbon nanotube blocks.

BACKGROUND OF THE INVENTION

Carbon nanotubes (CNTs), comprising multiple concentric shells and termed multi-wall carbon nanotubes (MWNTs), were discovered by lijima in 1991 [lijima, Nature 1991, 354, 56-58]. Subsequent to this discovery, single-wall carbon nanotubes (SWNTs), comprising single graphene sheets rolled up on themselves to form cylindrical tubes with nanoscale diameters, were synthesized in an arc-discharge process using carbon electrodes doped with transition metals [lijima et al., Nature 1993, 363, 603-605; and Bethune et al., Nature 1993, 363, 605-607]. These carbon nanotubes (especially SWNTs) possess unique mechanical, electrical, thermal and optical properties, and such properties make them attractive for a wide variety of applications. See Baughman et al., Science, 2002, 297, 787-792.

The incorporation of CNTs into polymer matrices is currently an area of considerable interest, as CNTs can impart unique properties to the composite or blended material. See, e.g., Mitchell et al., Macromolecules, 2002, 35, 8825-8830; and Zhu et al., Nano. Lett., 2003, 3,1107-1113. In some cases, CNTs have been covalently integrated into such polymeric hosts.

Another area of interest is CNT-containing fibers. In some reports, such fibers comprise a polymer matrix, whereas in other cases they are largely CNTs. In such later cases, CNT fibers have been spun from CNT suspensions in poly(vinylalcohol) [Vigolo et al., Science, 2000, 290, 1331-1334] and intercalating acids [Zhou et al., J. Appl. Phys., 2004, 95, 649-655; and Ericson et al., Science, 2004, 305, 1447-1450].

In light of the above-described advances in carbon nanotube science, new polymeric systems into which CNTs have been integrated into will continue to expand the range of applications with which they can be associated.

BRIEF DESCRIPTION OF THE INVENTION

The present invention is generally directed to the block copolymerization of aromatic polymers with carbon nanotubes (CNTs). Such block copolymers, having a CNT block component and an aromatic polymer block component, are referred to herein as "nanotube block copolymers." The present invention is also directed to fibers and other shaped articles made from these nanotube block copolymers of the present invention.

In some embodiments, the CNT block component is a single-wall carbon nanotube (SWNT). Typically, such SWNTs are first cut with a cutting process to provide short SWNTs, then (or simultaneously) end functionalized with moieties capable of coupling to the aromatic polymer block component. However, to the extent that suitably short SWNTs can be synthesized directly and suitably end-functionalized, such cutting is not required.

In some embodiments, the aromatic polymer (block) is a polybenzazole (PBZ). Block copolymers of the present invention comprising SWNTs and PBZ components are referred to herein as "SWNT/PBZ block copolymers." In some such embodiments, the PBZ block is polybezoxazole (PBO), giving rise to "SWNT/PBO block copolymers."

In some embodiments, the aromatic polymer is an aromatic polyamide. In some embodiments, the aromatic polyamide polymer is poly(*p*-phenylene terephthalamide) (PPTA). Block copolymers of the present invention comprising SWNTs and PPTA components are referred to herein as "SWNT/PPTA block copolymers."

Such above-described aromatic polymer blocks are typically (but not necessarily) ridged rod polymers. Other suitable aromatic polymer blocks include aromatic polyimides, aromatic polyesters, and aromatic heterocyclic polymers.

In some embodiments, both the cutting of the SWNTs (to produce shortened SWNTs) and the coupling of the shortened SWNTs to aromatic polyamides enhances the solubility and processability of SWNTs in aprotic solvents, strong add solvents, and other solvents. Additionally, the use of aromatic polymers, and particularly aromatic polyamides, in such block copolymers is advantageous in that it is both economical and preserves mechanical properties intrinsic to the SWNTs.

The foregoing has outlined rather broadly the features of the present invention in order that the detailed description of the invention that follows may be better understood. Additional features and advantages of the invention will be described hereinafter which form the subject of the claims of the invention.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as

contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

BRIEF DESCRIPTION OF THE DRAWINGS

For a more complete understanding of the present invention, and the advantages thereof, reference is now made to the following descriptions taken in conjunction with the accompanying drawings, in which:

FIGURE 1 depicts a single-wall carbon nanotube (SWNT)/polybezoxazole (PBO) copolymer, in accordance with some embodiments of the present invention;

FIGURE 2 depicts a SWNT/poly(*p*-phenylene terephthalamide) (PPTA) copolymer, in accordance with some embodiments of the present invention;

FIGURE 3 (Scheme 4) schematically depicts the preparation of *p*-phenylene benzobisoxazole 15 mers (15-mer PBO), in accordance with embodiments of the present invention;

FIGURE 4 (Scheme 5) schematically depicts the preparation of *p*-phenylene benzobisoxazole 45 mers (45-mer PBO), in accordance with some embodiments of the present invention;

FIGURE 5 (Scheme 6) depicts sidewall functionalization of short SWNTs with sulfanilic acid in oleum, in accordance with some embodiments of the present invention;

FIGURES 6A and 6B are atomic force microscopy (AFM) images of SWNTs before (6A) and after (6B) undergoing the functionalization depicted in Scheme 6;

FIGURE 7 (Scheme 7) schematically depicts copolymerization of short SWNTs and PBO 15 mers, in accordance with some embodiments of the present invention;

FIGURE 8 (Scheme 8) schematically depicts the copolymerization of short functionalized SWNTs and PBO 15 mers, in accordance with some embodiments of the present invention;

FIGURE 9 depicts Raman spectra (633 nm excitation) of SWNT/PBO copolymer films synthesized in dilute concentration, where trace (a) depicts copolymerized product (No.1, Table 1) from short SWNTs and PBO 15 mers at the weight ratio of 67/33 (0.36 wt.% concentration); and where trace (b) depicts PBO 15 mers;

FIGURE 10 depicts Raman spectra (633 nm excitation) of SWNT/PBO copolymer film prepared in higher concentration, where trace (a) depicts copolymerized product from short SWNTs/PBO 15 mers (No. 4, Table 1); and where trace (b) depicts benzenesulfonic acid-functionalized short SWNTs/PBO 15 mers (No. 5, Table 1) at the concentration of 3.3 wt.%;

FIGURE 11 depicts infrared (ATR-IR) spectra of variously-prepared polymer films; where trace (a) depicts benzenesulfonic acid-functionalized short SWNTs; where trace (b) depicts PBO 15 mers; and where trace (c) depicts copolymerized product (No-5, Table 1) of benzenesulfonic acid-functionalized short SWNTs/PBO 15 mers at the concentration of 3.3 wt%;

FIGURES 12A-12D are AFM images of a 2 mg sample/10cc methanesulfonic acid (MSA) solution spun onto a silicon disk and vacuum dried at 100°C overnight; wherein FIGS. 12A (height) and 12B (amplitude) are the height and amplitude images, respectively, depicting a physical mixture of functionalized short SWNTs and PBO 15 mers at weight ratio of 49/51; and wherein FIGS. 12C (height) and 12D (amplitude) are the height and amplitude images, respectively, depicting a copolymerized product (No. 5, Table 1) from functionalized short SWNTs and PBO 15 mers at weight ratio of 49/51;

FIGURE 13 (Scheme 9) schematically depicts the copolymerization of short SWNTs and PBO 45 mers, in accordance with some embodiments of the present invention;

FIGURE 14 (Scheme 10) schematically-depicts the copolymerization of short, sidewall-functionalized SWNTs and PBO 45 mers, in accordance with some embodiments of the present invention;

FIGURE 15 depicts Raman spectra of SWNTs/PBO copolymer film (633 nm excitation); wherein trace (a) depicts copolymerized product from PBO 45 mers and benzenesulfonic acid-functionalized short SWNTs (No. 7, Table 2); and wherein trace (b) depicts copolymerized product from PBO 45 mers and short SWNTs (No. 6, Table 2);

FIGURE 16 depicts Raman spectra of SWNTs/PBO copolymer film (780 nm excitation); wherein trace (a) depicts copolymerized product from PBO 45 mers and benzenesulfonic acid-functionalized short SWNTs (No. 7, Table 2); and wherein trace (b) depicts copolymerized product from PBO 45 mers and short SWNTs (No- 6, Table 2);

FIGURE 17 depicts Raman spectra of SWNTs/PBO copolymer films (514 nm excitation); wherein trace (a) depicts copolymerized product from PBO 45 mers and benzenesulfonic acid-functionalized short SWNTs (No. 7, Table 2); and wherein trace (b) depicts copolymerized product from PBO 45 mers and short SWNTs (No. 6, Table 2);

FIGURE 18 depicts a conventional dry-jet wet spinning process, in accordance with some embodiments of the present invention;

FIGURES 19A and 19B are scanning electron microscopy (SEM) images of a PBO 45 mer fiber (19A) and a

copolymer (No. 8, Table 2) fiber of PBO 45 mers and benzenesulfonic acid-functionalized short SWNTs at the weight ratio of 90/10 (19B);

FIGURE 20 depicts blending of high molecular weight PBO and copolymer of short SWNTs and PBO useful in the fiber spinning of SWNTs/PBO fibers, in accordance with some embodiments of the present invention;

FIGURE 21 (Scheme 11) schematically depicts the synthesis of PPTA with amine groups at both ends, in accordance with some embodiments of the present invention; and

FIGURE 22 (Scheme 12) schematically depicts the copolymerization of short SWNTs and PPTA, in accordance with some embodiments of the present invention.

## DETAILED DESCRIPTION OF THE INVENTION

In the following description, specific details are set forth such as specific quantities, sizes, etc. so as to provide a thorough understanding of embodiments of the present invention. However, it will be obvious to those skilled in the art that the present invention may be practiced without such specific details. In many cases, details concerning such considerations and the like have been omitted inasmuch as such details are not necessary to obtain a complete understanding of the present invention and are within the skills of persons of ordinary skill in the relevant art.

The present invention is generally directed to the block copolymerization of aromatic polymers with carbon nanotubes (CNTs). Such block copolymers, having a CNT block component and an aromatic polymer block component, are referred to herein as "nanotube block copolymers." The present invention is also directed to fibers and other shaped articles made from these nanotube block copolymers of the present invention. As stated, the CNT block component may contain a single CNT, e.g. a single SWNT. The terms "CNT block" and "SWNT block" are therefore to be understood as including reference to exactly one CNT or SWNT.

Block copolymers are polymers that comprise polymer or oligomer chains of one type of polymer that are connected with polymer or oligomer chains of one or more other types of polymers. Such polymerization leads to polymer chains having structures like that of the following di-block copolymer.

-AAAAAAAAAAAAAAAA-BBBBBBBBBBBBBBB-

or tri-block copolymer

-AAAAAAAAAAA-BBBBBBBBBB-AAAAAAAAAA-,

where "A" is a repeat unit (i.e., a "mer") for a first polymer block, and "B" is a repeat unit for a second polymer block. An example of a common block copolymer is poly(styrene-butadiene-styrene), or SBS.

In the case of the nanotube block copolymers of the present invention, at least one of the polymer blocks is a carbon nanotube (itself an all-carbon rigid polymer) and at least one of the blocks is an organic-based aromatic polymer or oligomer. For the purposes of this discussion, oligomers are merely short polymer chains and reference to polymer block components hereinafter as polymers will be understood to include oligomers. While the block copolymers of the present invention, referred to herein as nanotube block copolymers, generally comprise at least one CNT block and at least one aromatic polymer block, they may comprise blocks of other types as well.

In some embodiments, because of the possibility of multiple coupling (i.e., attachment) sites on the side-walls of the CNTs and/or the CNT ends, one or both ends of the CNTs may be coupled to multiple aromatic polymer blocks.

CNTs, according to the present invention, include, but are not limited to, single-wall carbon nanotubes (SWNTs), multi-wall carbon nanotubes (MWNTs), double-wall carbon nanotubes (DWNTs), small-diameter (< 3nm) carbon nanotubes (SDCNTs), buckytubes, fullerene tubes, tubular fullerenes, graphite fibrils, and combinations thereof. Such carbon nanotubes can initially be of a variety and range of lengths, diameters, number of tube walls, chiralities (helicities), etc., and can generally be made by any known technique. The terms "carbon nanotube" and "nanotube" will be used interchangeably herein. Such CNTs are often subjected to one or more purification steps [see, e.g., Chiang et al., J. Phys. Chem. B, 2001, 105, 1157-1161; Chiang et al., J. Phys. Chem. B 2001, 105, 8297-8301]. In some embodiments, the CNTs are cut by one or more cutting techniques [*see,* e.g., Liu et al., Science, 1998, 280, 1253-1256; and Gu et al., Nano Left., 2002, 2, 1009-1013]. Included are embodiments in which the CNTs, e.g. SWNTs, are derivatised by the addition of substituents to their end walls and/or sidewalls; in embodiments, such substituents include reactive functional group but in other embodiments they do not. For further teaching on derivatisation of SWNTs see WO 00/17101, WO 2005/090233, WO 2005/012171 and WO 2005/028740. Thus, the polymers of the invention in some embodiments comprise CNTs, e.g. SWNTs, which have substituents on their end walls and/or side walls.

In some embodiments, the aromatic polymer blocks are polybenzazoles (PBZ) or other aromatic polymers. PBZs have the general formula:

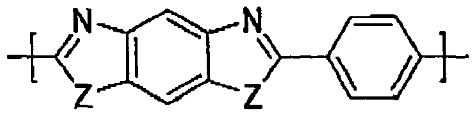

Z = -O, -S, -NH.

Other suitable such polymer blocks are cis- and trans-polybezoxazole (PBO):

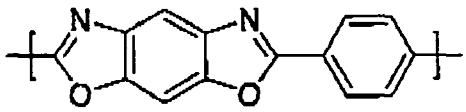

"cis"

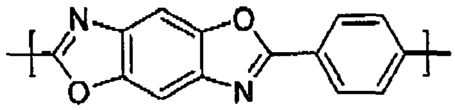

"trans"

and cis- and trans- poly-*p*-phenylenebisbenzthiozole (PBT):

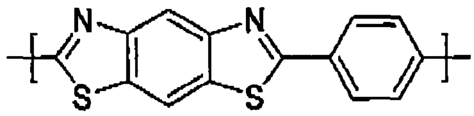

"cis"

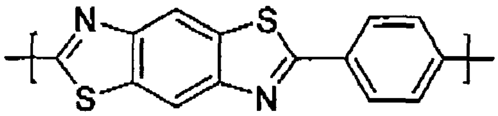

"trans"

and poly-2,5-(benzoxazole) (ABPBO):

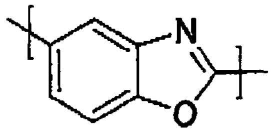

In some embodiments, SWNT blocks are coupled to aromatic polymer blocks via a condensation reaction to form "SWNT block copolymers" In some embodiments, the aromatic polymer (block) is a polybenzazole (PBZ). Block copolymers of the present invention comprising SWNTs and PBZ components are referred to herein as "SWNT/PBZ block copolymers." In some such embodiments, the PBZ block is polybezoxazole (PBO), giving rise to "SWNT/PBO block copolymers."

In some embodiments, the aromatic polymer blocks are aromatic polyamides or other aromatic polymers- Such aromatic polyamides have the general formula:

$$-[NH-Ar-NH-CO-Ar-CO-]_n- \text{ or } -[-NH-Ar-CO-]_n-$$

where "n" is an integer indicative of the number of respective repeat units.

For the above aromatic polyamide polymers, suitable aromatic units, -Ar-, include, but are not limited to, one or more of, substituted or unsubstituted 1,4-phenylene; substituted or unsubstituted 4,4'-biphenylene; substituted or unsubstituted 2,6-naphthylene; substituted or unsubstituted 1,5-naphthylene; substituted or unsubstituted *N,N'*-piperazine; substituted or unsubstituted 1,3,4-oxadiazol; substituted or unsubstituted phenylbenzimide; substituted or unsubstituted 1,4-xylylene; substituted or unsubstituted 2,5-pyridylene; and combinations thereof. The aromatic units may comprise pendant groups such as, but not limited to, alkyl, halogen, alkoxy, cyano, acetyl, nitro, and the like. When the aromatic unit includes more than one aromatic group, the aromatic groups may be bridged by bridging units between the aromatic units, or they may be directly linked via a covalent bond. Suitable such bridging units include, but are not limited to, ether, sulfide, sulfone, ketone, amine, ethylene, azo, ester, diazo and other like linkages.

Other suitable aromatic polymer polymer blocks include aromatic polyimides, aromatic polyesters, and aromatic heterocyclic polymers.

As mentioned above, in some embodiments, SWNT blocks are coupled to aromatic polymer blocks via a condensation reaction to form "SWNT block copolymers." In some such embodiments, these aromatic polymer blocks are poly(*p*-phenylene terephthalamide) (PPTA). Block copolymers of the present invention comprising SWNTs and PPTA components are referred to herein as "SWNT/PPTA block copolymers."

In some embodiments, short SWNTs are covalently bonded to PPTA, other aromatic polyamides, or other aromatic polymers of finite length, to improve the solubility of SWNTs in aprotic solvents, mineral acids, or other solvents, and to prevent the formation of aggregates (ropes) of SWNTs.

In some embodiments, the spinning or casting of the above-mentioned SWNT/PBZ copolymers and/or SWNT/PPTA copolymers can be carried out from liquid crystalline solutions at higher concentrations than previously possible. This affords a more effective coagulation process and easy alignment of nanotube block copolymers during the spinning or casting process.

In some embodiments, the coupling of aromatic polymers (e.g., PBZ or PPTA) to short SWNTs improves the strength ("leg") of spinning or casting solutions due to stronger interaction between polymer molecules over that of neat SWNT solutions. This can improve shaping processes and lead to shaped articles with ultra-high performance properties afforded by SWNTs.

In some embodiments, the present invention is directed to the synthesis of (i.e., methods of making) block copolymers comprising short SWNTs and aromatic polyamide blocks and/or other aromatic polymer blocks; fibers and other compositions containing these block copolymers; processes for making shaped articles from these block copolymers comprising aromatic polymer blocks and SWNT blocks; and shaped articles made by these processes.

In some embodiments, the present invention is directed toward physical blends of any of the above-described nanotube block copolymers with their corresponding homopolymers; fibers and other compositions containing these blends; processes for making shaped articles from these blends comprising blockpolymers of SWNT and aromatic polymers and the corresponding aromatic polyamide; and shaped articles made by these processes.

In some embodiments, methods for making nanotube block copolymers comprise a cutting and end-functionalizing of SWNTs, followed by reaction with suitably functionalized aromatic polymer blocks.

The synthesis of functionalized short SWNTs, according to some embodiments of the present invention, is shown below in Scheme 1:

Scheme 1

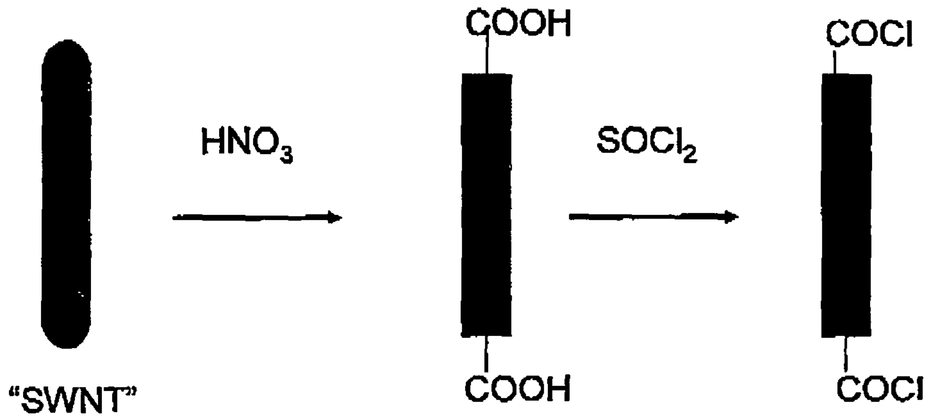


1 2 3

Referring to Scheme 1, SWNTs (1) are first cut in an oxidative acid (e.g., $HNO_3$) or acid mixture (e.g., piranha) to yield short SWNTs bearing carboxyl species (e.g., -COOH groups) on their open ends and/or on their side-walls (2). Such carboxyl species can then be converted to acyl chloride species (-COCl) by reaction with thionyl chloride ($SOCl_2$) to yield (3). Such above-described chemistry is known in the art. See, e.g., Liu et al., Science, 1998, 280, 1263-1256; and Chen et al., Science, 1998, 282, 95-98

In some embodiments of the present invention, short SWNTs are used to enhance the solubility of the SWNT blocks in aprotic solvents such as *N*-methyl-2-pyrrolidone (NMP), dimethyl acetamide (DMAc), *N,N*-dimethylformamide (DMF), 1,3 dimethyl-2-imidazolidinone (DMI), dimethylsulfoxide (DMSO), and the like, or in strong acids such as, but not limited to, sulfuric acid, oleum (fuming sulfuric acid which is $H_2SO_4$ with dissolved $SO_3$ to remove trace water), methanesulfonic acid (MSA), and the like. Similarly, the short functionalized SWNT-COOH and SWNT-COCl will have improved solubility in the above mentioned aprotic solvents or strong acids. The enhanced solubility of short SWNTs and their functionalized counterparts affords the advantage of SWNTs being processed (fibers spun or films cast) at higher SWNT concentrations in aprotic solvents or in strong acids. The shaped articles, fibers or films, will generally have greater overall mechanical strength due to the more effective process of coagulation and the enhanced orientability of SWNTs in these higher concentrated solutions.

As mentioned above, in some embodiments of the present invention, short SWNTs, generally with length of less than about 1000 nm, typically less than 100 nm, more typically 5-100 nm, and most typically 5-50 nm, are used. Typically, such individual SWNTs have diameters of about 1 nm. Accordingly, some embodiments of the present invention use SWNTs with aspect ratios (defined as the length divided by diameter) of less than about 1000; typically less than 100; more typically between 5-100; and most typically between 5-50. Likewise, the functionalized SWNTs have aspect ratios generally less than about 1000, typically less than 100, more typically between 5 and 100 and most typically between 5 and 50.

In some embodiments, the functionalized group (i.e., chemical moiety) on the SWNT ends, shown as -COOH and/or -COCl in Scheme 1, is an electron-deficient carbon group, but can generally be any group containing a carbon atom that can react in the aprotic solvents or mineral acids with the amine moiety at the end(s) of aromatic polymers to form amide linkages between the SWNT and aromatic polymer blocks. Suitable electron-deficient groups include, but are not limited to, carboxylic acids, acid halide, metal carboxylate salts, cyano groups and trihalomethyl groups. Halogens in such electron-deficient carbon groups are typically fluorine, chlorine, or bromine, and more typically chlorine.

A synthesis of amine-terminated aromatic polymer blocks such as PPTA is shown below in Scheme 2, where an amide-forming moiety (4) is reacted with a species comprising an electron-deficient carbon moiety (5) to yield an amine-terminated aromatic polyamide (6), in accordance with some embodiments of the present invention. Scheme 2

$$H_2N\text{-}Ar\text{-}NH_2 \quad + \quad ClCO\text{-}Ar\text{-}COCl \rightarrow H\text{-}(\text{-}NH\text{-}Ar\text{-}NH\text{-}CO\text{-}Ar\text{-}CO\text{-})_n\text{-}NH\text{-}Ar\text{-}NH_2$$

**(4)** **(5)** **(6)**

Referring to Scheme 2, suitable aromatic units, -Ar-, include, but are not limited to, 1,4-phenylene; 4-4'-biphenyl; 2,6-naphthylene; 1,5-naphthylons; *N,N'*-piperazine; 1,3,4-oxadiazol; phenylbenzimide; 1,4-xylylene; 2,5-pyridylene; and the like. Such aromatic units may comprise one or more pendant groups. Where there is more than one pendant group (i-e. more than one substituent on the aromatic ring(s) of the aromatic unit), the groups may be the same or different. The or each aromatic ring of an aromatic unit may have for example, 0, 1, 2, 3 or 4 pendant groups. Thus biphenyl may have 0, 1, 2, 3, 4, 5, 6, 7 or 8 pendant groups and phenylene from 0 to 4, as stated. As pendant groups may be mentioned alkyl, halogen, alkoxy, cyano, acetyl and nitro. When the aromatic unit includes more than one aromatic group, the aromatic groups are optionally bridged by bridging units between the aromatic units. Suitable such bridging units include, but are not limited to, ether (-O-), sulfide (-S-), sulfone ($-SO_2-$), ketone (-CO-), amine (-NR-), where R is for example H or alkyl, ethylene ($-CH_2CH_2-$) and azo.

Referring again to Scheme 2, n can generally be as low as 2 and as high as practically feasible (e.g., 2000). Typically, n is about 5 to 100, and more typically between 5 and 50. In the above Scheme 2, the amide-forming moiety (4) is a p-amino-basic moiety which is bonded to an aromatic group comprising a primary amine group bonded to the aromatic group. The other reactant (5) in the above reaction comprises an electron-deficient carbon group. As mentioned above, this carbon group can be any group containing a carbon atom that can react in the aprotic solvents or mineral acid with an amino-basic moiety to form an amide. Suitable electron-deficient carbon groups include, but are not limited to, carboxylic acids, acid halides, metal carboxylate salts, cyano groups and trihalomethyl groups. Halogens in electron-deficient carbon groups are typically fluorine, chlorine, or bromine, and more typically chlorine.

The solvents used in the above reaction can be any aprotic solvents or mineral acid or their mixtures capable of dissolving the polymerizing reactants and aromatic polyamide polymers. The reaction may be carried out in the presence of a dehydrating agent or dessicant, e.g. $CaCl_2$. Thus, the above acids and mixtures may also comprise $P_2O_5$.

A key aspect of the present invention is the block copolymerization of short, functionalized SWNTs (as shown in Scheme 1) with amine-terminated aromatic polymer blacks (as shown in Scheme 2) in aprotic solvents such as NMP, DMAc, etc. or in strong mineral acids capable of dissolving both reactants without any detrimental reaction or degradation of the reactants. An exemplary copolymerization reaction is shown in Scheme 3 below, where functionalised SWNTs, e.g. shortened functionalized SWNTs (3), are reacted with amine-terminated aromatic polyamides (6) to yield SWNT/aromatic polyamide block copolymer (7).

**Scheme 3**

$$HOOC\text{-}SWNT\text{-}COOH \; + H\text{-}(\text{-}NH\text{-}Ar\text{-}NH\text{-}CO\text{-}Ar\text{-}CO\text{-})_n\text{-}NH\text{-}Ar\text{-}NH_2 \longrightarrow$$

**(3)** **(6)**

$$H_2N\text{-}Ar\text{-}NH\text{-}(CO\text{-}Ar\text{-}CONH\text{-}Ar\text{-}NH\text{-})_m\text{-}CO\text{-}SWNT\text{-}CO\text{-}(\text{-}NH\text{-}Ar\text{-}NHCO\text{-}Ar\text{-}CO)_n\text{-}NH\text{-}Ar\text{-}NH_2$$

**(7)**

In some such above-described embodiments, the reaction is carried out in an aprotic solvent, such as NMP with $CaCl_2$. In embodiments the reaction is carried out in the presence of a condensate agent, e.g. $(PhO)_3$, $(PhO)PCl_2$, $PhPOCl_2$, $(C_3H_7)_3P(O)O$, $POCl_3$, $SOCl_2\text{-}Et_3N$, $Ph_3P\text{-}C_2Cl_6$, $SiCl_4$, $Me_2SiCl_2$, and the like. Thus, there are included methods in which the polymerization reaction is performed in an aprotic solvent and in the presence of a condensation reagent. Additionally, the reaction may optionally be carried out with an excess of amine-terminated aromatic polyamide relative to the short functionalized SWNT.

In the above embodiments directed toward the formation of SWNT/aromatic polyamide block copolymers in aprotic solvent, the total concentration of the two reactants in the solvent (i.e., the short functionalized SWNTs and the aromatic polyamide blocks) is dependent upon the length of both of the block components. Generally, the concentration

should be controlled and optimized such that the solution will have maximum concentration and minimum bulk viscosity for ease of processing, such as in fiber spinning or film casting. Dependent upon the concentration, the resultant copolymer solution can be optically isotropic or optically anisotropic, the latter of which can be liquid crystalline in form and probably nematic. Although the reaction between (3) and (6) in Scheme 3 shows the formation of an aromatic polyamide-SWNTaromatic polyamide tri-biock copolymer (7, wherein a SWNT is itself considered to be a block), the reaction can be tailored to form di-block or random block copolymers of SWNT with aromatic polyamide, dependent upon the level and arrangement of -COOH, or -COCl groups on the SWNT, i.e., how many -COOH moieties are bonded to each SWNT, and which end or both ends, or even on the side-wails of the SWNTs that the - COOH moieties are bonded to, and the functionality at the ends of the aromatic polyamide reactant. For example, the reaction may be tailored to form a diblock copolymer by providing one -COOH group on the SWNT. Similarly, the reaction may be tailored to form a triblock copolymer by providing two -COOH groups on the SWNT.

For the above-described SWNT/aromatic polyamide block copolymers of the present invention, the product compositions typically range from between about 1/99 SWNT/aromatic polyamide (wt/wt %) to about 99/1 SWNT/aromatic polyamide (wt/wt %) and more typically range from between about 5/95 SWNT/aromatic polyamide (wt/wt%) to about 95/5 SWNT/aromatic polyamide (wt/wt%). In some embodiments, it is desirable to have as high a content of SWNT as possible.

Advantages of block copolymerizing aromatic polymers with SWNTs include minimal compromise in the resulting materials' ultimate performance, as well as the economics and current understanding of aromatic polymer systems, i.e., they are relatively inexpensive, commercially available, and the fiber spinning of aromatic polymer systems like PBZ and PPTA is well known. Additionally, they are soluble in acid solvents.

Other aspects of the present invention are processes of shaping the above solutions/compositions (i.e., Scheme 3) into useful articles such as fibers or films. In some embodiments, fibers made by the nanotube block copolymer compositions of the present invention have superior mechanical properties; superior chemical, thermal, thermo-oxidative, and dimensional stability; ultra-light weight; and unique electrical/electro-magnetic properties suitable for structural application as the fiber component of advanced composites for aerospace and space vehicles. Other utility can be found in electronic and electrical applications, and also important utility in protective body (personal, vehicular, structural) armor. The above-mentioned properties can surpass those of state of the art organic fibers such as ZYLON (Zylon® is a registered trademark of Toyobo Co., Ltd., Osaka, Japan), KEVLAR (Kevlar® is a registered trademark of E.I. du Pont de Nemours and Co., Wilmington, DE), and TWARON (Twaron® is a registered trademark of Teijin Twaron B.V. Ltd., Arnhem, Netherlands) for example, or other advanced carbon fibers currently being used in the above-mentioned applications.

The current art of spinning fibers of neat SWNTs (with indiscriminate lengths) or casting neat SWNT films has had limited success with regard to fully realizing the potential of SWNTs [Ericson et al., Science, 2004, 304, 1447-1450]. This is partly due to the low solubility of SWNTs in common organic or mineral acid solvents, and the intractability of SWNT ropes, i.e., aggregates of individual SWNT, readily formed during or before the dissolution process. Also, the current art of spinning composite SWNT fibers from solutions of physical mixtures of SWNTs of indiscriminate lengths (as opposed to the cut, shortened SWNTs used in some embodiments of the present invention) with other polymers, including PBO and PPTA, has had limited success due to the relatively low level of dispersability of SWNTs in these polymers.

The present invention teaches, in part, the covalently bonding of short (e.g., shortened) SWNTs with aromatic polymers of finite length. The shorter length improves the solubility of SWNTs in aprotic solvents, mineral acids, and other solvents, and minimizes the formation of aggregates (ropes) of SWNTs. Furthermore, aromatic polymers like PBZ and PPTA are readily soluble in such above-described aprotic solvents and acids and can impart the short SWNTs with increased solubility (and processability) when covalently attached to the short SWNTs in the form of a block copolymer. Consequently, the spinning or casting of SWNT-based nanotube block copolymers can be carried out with liquid crystalline solutions at higher concentrations which afford a more effective coagulation process and easy alignment of, e.g., SWNT/aromatic polyamide copolymers during the spinning process. Also, in some embodiments, the incorporation of aromatic polyamide with SWNT can improve the strength ("leg") of the spinning or casting solutions due to stronger interaction between molecules. This generally improves the shaping process and generally leads to shaped articles with ultra-high performance properties afforded by SWNT.

As used herein, the term "halogen" includes reference to F, Cl, Br or I, e.g. Cl, "alkyl" and the alkyl part of "alkoxy" may have, for example, from 1 to 10 carbon atoms, e.g. 1 to 6, such as 1, 2, 3 or 4.

The following examples are provided to more fully illustrate some of the embodiments of the present invention. It should be appreciated by those of skill in the art that the techniques disclosed in the examples which follows represent techniques discovered by the inventors to function well in the practice of the invention, and thus can be considered to constitute exemplary modes for its practice. However, those of skill in the art should, in light of the present disclosure, appreciate that many changes can be made in the specific embodiments that are disclosed and still obtain a like or similar result without departing from the spirit and scope of the invention.

Further aspects and embodiments of the present invention are described in the following paragraphs:

1. A block copolymer comprising:

a) a first block material comprising short single-wall carbon nanotubes (SWNTs); and

b) a second block material comprising an aromatic polyamide polymer;

2. The block copolymer of paragraph 1, wherein said block copolymer is selected from the group consisting of di-block copolymers, tri-block copolymers, random-block copolymers, and combinations thereof;

3. The block copolymer of paragraph 1, wherein the short single-wall carbon nanotubes have lengths that range from about 5 nm about 100 nm;

4. The block copolymer of paragraph 1, wherein the short single-wall carbon nanotubes aspect ratios that range from about 5 about 100;

5. The block copolymer of paragraph 1, wherein the aromatic polyamide polymer is poly(p-phenylene terephthalamide) (PPTA);

6. The block copolymer of paragraph 1, wherein the aromatic polyamide polymer comprises a number of repeat units that ranges from about 2 to about 2000;

7. The block copolymer of paragraph 1, wherein the aromatic polyamide polymer comprises a number of repeat units that ranges from about 5 to about 50;

8. The block copolymer of paragraph 1, wherein the aromatic polyamide polymer comprises a number of repeat units that ranges from about 5 to about 30;

9. The block copolymer of paragraph 1, wherein the block copolymer has a SWNT/aromatic polyamide composition that ranges from about 1/99 SWNT/oromatic polyamide (wt/wt%) to about 99/1 SWNT/aromatic polyamide (wt/wt%);

10. A method comprising the steps of:

a) providing a first block material comprising functionalized short single-wall carbon nanotubes;

b) providing a second block material comprising aromatic polyamide polymers comprising amide-forming moieties on their ends; and

c) copolymerizing the first block material with the second block material to form a block copolymer material;

11. The method of paragraph 10, wherein the functionalized short single-wall carbon nanotubes are functionalized with chemical moieties selected from the group consisting of carboxylic acid groups, acyl chloride groups, and combinations thereof; and wherein the chemical moieties are attached to the functionalized short single-wall carbon nanotubes in a manner selected from the group consisting of end-attached, sidewall attached, and combinations thereof;

12. The method of paragraph 10, wherein the step of copolymerizing is carried out in a aprotic solvent capable of dissolving both reactants without degradation of either of said reactant;

13. The method of paragraph 10, wherein the short single-wall carbon nanotubes have lengths that range from about 5 nm about 100 nm;

14. The method of paragraph 10, wherein the short single-wall carbon nanotubes have aspect ratios that range from about 5 about 100;

15. The method of paragraph 10, wherein the second block material comprising aromatic polyamide polymers comprises poly(p-phenylene terephthalamide) (PPTA);

16. The method of paragraph 10, wherein the amide-forming moieties on the ends of said second block material comprising aromatic polyamide polymers comprise an amine moiety;

17. The method of paragraph 11, wherein the aprotic solvent in which the first block material with the second block material are copolymerized is selected from the group consisting of NMP, DMAc, DMF, DMSO, DMI, and combinations thereof;

18. The method of paragraph 10 further comprising a step of spinning the block copolymer material into a fiber;

19. The method of paragraph 10 further comprising a step of casting the block copolymer material into a film;

20. The method of paragraph 10 further comprising a step of shaping the block copolymer material into a particular shape;

21. A fiber comprising the block copolymer of paragraph 1;

22. A film comprising the block copolymer of paragraph 1;

EXAMPLE 1

While not intending to be bound by theory, this Example serves to illustrate, by virtue of Halpin-Tsai equations, the reinforcing efficiency and therefore, the benefit of incorporating short SWNTs into aromatic polymer block copolymer materials. For

$$E_c = ((1+\alpha\mu\upsilon_f)/(1-\mu\upsilon_f))E_m$$

$$\alpha \sim 2(l/d)$$

$$\mu=(E_f/E_m-1)/(E_f/E_m+\alpha)$$

Where:

Ec=Young's modulus of composite fiber

Em=Young's modulus of matrix (e.g., PPTA)

Ef=Young's Modulus of SWNT

l=length of SWNT, d=diameter of SWNT

$\alpha$=2*(aspect ratio of SWNT)

$\upsilon$f=volume fraction of SWNT

$\upsilon$m=volume fraction of PPTA.

The reinforcement efficiency of SWNT is defined as: RE=Ec/(Ef$\upsilon$f+Em$\upsilon$m) and (Ef$\upsilon$f+Em$\upsilon$m) represents the ultimate linear rule-of-mixture modulus of a uniaxially oriented composite. Thus, for a 50/50 v/v% SWNT/PPTA composite fiber, the calculated RE, using the above equations, is 1 (or 100% reinforcement efficiency) for SWNTs with aspect ratio of 32 and Ef/Em of 10. On the other hand, when a softer matrix is used, e.g., Ef/Em=50, it would require the aspect ratio of SWNTs to be at least 200 in order to achieve 95% of reinforcement efficiency. This simply means that with a rigid matrix such as PPTA, very short SWNTs can be utilized as reinforcement without any degradation in reinforcement efficiency.

EXAMPLE 2

This Example serves to illustrate the preparation of p-phenylene benzobisoxazole 15 mers, in accordance with some embodiments of the present invention.

Referring to Scheme 4 (FIG. 3), 4.4765 g (21.01 mmol) of diaminoresorcinol dihydrochloride and 4.0 g (19.70 mmol) terephthaloyl chloride were added to a solvent mixture of 33.1529 g of polyphosphoric acid (84.5% as P205) and 0.4331 g of P2O5 (total P2O5 content in mixture = 84.7 wt.%) to yield a reaction mixture. The reaction mixture underwent a dehydrochlorination step at 45°C for 16 hours; whereas an oligomerization step was carried out at 95°C for 8 hours, 150°C for 16 hours, and 190°C for 24 hours. This yielded a p-phenylene benzobisoxazole oligomer with an inherent viscosity of 1.96 dL/g.

EXAMPLE 3

This Example serves to illustrate the preparation of p-phenylene benzobisoxazole 45 mers, in accordance with some embodiments of the present invention.

Referring to Scheme 5 (FIG. 4), 6.5 g (30.51 mmol) of diaminoresorcinol dihydrochloride and 6.0593 g (29.85 mmol) terephthaloyl chloride were added to a solvent mixture of 48.9445 g of polyphosphoric acid (84.5% as P2O5) and 0.64 g of P2O5 (total P2O5 content in mixture = 84.7 wt.%) to yield a reaction mixture. The reaction mixture underwent a dehydrochlorination step at 45°C for 16 hours; whereas an oligomerization step was carried out at 95°C for 8 hours, 150°C for 16 hours, and 190°C for 24 hours. This yielded a p-phenylene benzobisoxazole oligomer (45 mer) with an inherent viscosity of 7.06 dL/g.

EXAMPLE 4

This Example serves to illustrate sidewall functionalization of short SWNTs with sulfanilic acid in oleum, in accordance with some embodiments of the present invention. Such functionalization is generally described in the following commonly-assigned international patent application: Tour et al., "Functionalization of Carbon Nanotubes in Acidic Media," Serial No. PCT/US05109677 (Publication No. WO2005113434), filed March 24, 2005.

Referring to Scheme 6 (FIG. 5), 250 mg (20.81 mmol) of short (ca. 60 nm) SWNTs were reacted with 14.4163 g (20.81x4 mmol) of sulfanilic acid in a reaction mixture comprising 100 mL H2SO4 (fuming, 20% free SO3), 5.7436 g (20.81x4 mmol) sodium nitrite, and 683 mg (20.81x0.2 mol) 2,2'-azrobisisobutyronitrile (AIBN). This yielded water-soluble, sidewall-functionalized short SWNTs, as shown in Scheme 6.

The sidewall-functionalized short SWNTs were characterized by UV-vis spectroscopy as being devoid of van Hove singularities FIGURES 6A and 6B are atomic force microscopy (AFM) images of the short SWNTs before (FIG. 6A) and after (FIG. 6B) the above-described functionalization. The AFM images show that the short SWNTs were exofoliated into individuals and small bundles by the sidewall-functionalization.

EXAMPLE 5

This Example serves to illustrate the copolymerization of short SWNTs and PBO 15 mers, in accordance with some embodiments of the present invention.

Referring to Scheme 7 (FIG. 7), 0.2 g of a polyphosphoric acid (PPA) solution of p-phenylene benzobisoxazole 15 mer (the solution comprising 25 mg of PBO 15 mer) was combined with a suspension comprising 50 mg of short (ca. 60 nm) SWNTs, 10 g MSA, 10 g PPA (84.5% as P2O5) and 0.15 g of P2O5. This was allowed to react at 100°C for 3 days to yield a SWNT/PBO 15 mer block copolymer, as depicted in Scheme 7.

EXAMPLE 6

This Example serves to illustrate the copolymerization of short sidewall-functionalized SWNTs and PBO 15 mers, in accordance with some embodiments of the present invention.

Referring to Scheme 8 (FIG. 8), 0.4 g of a PPA solution of p-phenylene benzobisoxazole 15 mer (comprising 50 mg of PBO 15 mer) was combined with 36 mg of short (ca. 60 nm) benzenesulfonic acid-functionalized SWNTs (see, e.g., EXAMPLE 4) in a reaction mixture further comprising 10 g of MSA, 10 g PPA, and 1.0 g P205. The reaction mixture was then heated at 100°C for 3 days to yield short sidewall-functionalized SWNT/PBO 15 mer block copolymers, as depicted in Scheme 8.

EXAMPLE 7

This Example serves to illustrate Raman and infrared (IR) spectroscopic analysis and AFM analysis of a series of SWNT/PBO 15 mer block copolymers prepared under a variety of conditions.

Table 1 details a variety of SWNT/PBO 15 mer block copolymers prepared via copolymerization of short SWNTs and PBO 15 mers carried out in a mixed solvent of PPA/MSA with P2O5 for 3 days.

Table 1

| No. | Wt ratio of PBO 15 mers and short SWNTs | Molar ratio of PBO 15 mers to short SWNTs | Wt ratio of PPA and MSA | Temp (°C) | Concentration (wt%) | | |
|---|---|---|---|---|---|---|---|
| | | | | | PBO/SWNTs [a] | PBO | SWNTs [a] |
| 1 | 67/33 | 16 | 50/50 | 100 | 0.36 | 0.12 | 0.24 |

(continued)

| No. | Wt ratio of PBO 15 mers and short SWNTs | Molar ratio of PBO 15 mers to short SWNTs | Wt ratio of PPA and MSA | Temp (°C) | Concentration (wt%) PBO/SWNTs [a] | PBO | SWNTs [a] |
|---|---|---|---|---|---|---|---|
| 2 | 33/67 | 64 | 50/50 | 100 | 0.36 | 0.24 | 0.12 |
| 3 | 33/67 [b] | 64 | 50/50 | 100 | 0.36 | 024 | 0.12 |
| 4 | 33/67 | 64 | 17/83 | 150 | 3.3 | 22 | 1.1 |
| 5 | 33/67[b] | 64 | 17/83 | 150 | 3.3 | 2.2 | 1.1 |

a: Calculated based on SWNTs weight for benzenesulfonic acid short SWNTs. b: Benzenesulfonic acid functionalized short SWNTs were used.

FIGURE 9 depicts the Raman spectra (633 nm excitation) of SWNT/PBO copolymer film synthesized in dilute concentration, wherein trace (a) depicts copolymerized product No. 1 (see Table 1) prepared from short SWNTs and PBO 15 mers at the weight ratio of 67/33 (0.36 wt% concentration), and wherein trace (b) depicts PBO 15 mers. This confirms that the SWNTs are indeed incorporated within the SWNT/PBO copolymer, as the PBO alone shows no characteristic Raman bands in this region of the spectrum.

FIGURE 10 depicts the Raman spectra (633 nm excitation) of SWNT/PBO copolymer film prepared in higher concentration, wherein trace (a) depicts copolymerized product No. 4 (see Table 1), and wherein trace (b) depicts benzenesulfonic acid-functionalized short SWNT/PBO 15 mers (copolymerized product No. 5, Table 1). The copolymerized functionalized SWNT/PBO indeed shows the characteristic functionalized SWNT Raman bands, confirming the functionalized SWNTs are incorporated in the copolymer, i.e., it is not merely PBO alone.

FIGURE 11 depicts attenuated total reflectance-infrared (ATR-IR) spectra of benzenesulfonic acid-functionalized short SWNTs (trace a), PBO 15 mers (trace b), and the copolymerized product (No. 5, Table 1) of benzenesulfonic acid-functionalized short SWNT/PBO 15 mers at the concentration of 3.3 wt.%. The SWNT/PBO copolymer spectrum is a composite (near summation) spectrum of the independent SWNT and the independent PBO spectra, therefore confirming the presence of both components in the copolymer.

Shown in FIGURES 12A-12D are AFM images of a 2 mg sample/10 cc MSA solution spun onto a silicon wafer and vacuum dried at 100°C overnight FIGURES 12A (height) and 12B (amplitude) depict a physical mixture of functionalized short SWNTs and PBO 15 mers at a weight ratio of 49/51 as height and amplitude scans, respectively. FIGURES 12C (height) and 12D (amplitude) depict copolymerized product (No. 5, Table 1) from functionalized short SWNTs and PBO 15 mers at a weight ratio of 49/51 as height and amplitude scans, respectively. The physical mixture is clearly different, at the nanoscale level, than the copolymerization product. The latter (FIGS. 12C and 12D) have a thicker appearance, due to the covalently-appended oligomers, which further keeps the SWNT portions primarily as individuals, i.e., they do not tend to bundle into longer structures.

EXAMPLE 8

This Example serves to illustrate the copolymerization of short SWNTs and PBO 45 mers, in accordance with some embodiments of the present invention.

Referring to Scheme 9 (FIG. 13), *p*-phenylene benzobisoxazole 45 mer was synthesized and then block copolymerized with short (ca. 60 nm) SWNTs, the short SWNTs comprising carboxylic acid (-COOH) groups on the ends. The copolymerization was carried out in a reaction mixture comprising 250 mg of short SWNTs, 2.0 g of a PPA solution of PBO 45 mer (comprising 250 mg of PBO 45 mer), 15 g methanesulfonic acid, and 1.5 g $P_2O_5$. The copolymerization was allowed to proceed at a temperature of 150°C for a period of 3 days to yield a SWNT/PBO 45 mer block copolymer, as depicted in Scheme 9.

EXAMPLE 9

This Example serves to illustrate the copolymerization of short sidewall-functionalized SWNTs and PBO 45 mers, in accordance with some embodiments of the present invention.

Referring to Scheme 10 (FIG. 14), *p*-phenylene benzobisoxazole 45 mer was synthesized and then block copolymerized with short (ca. 60 nm) benzenesulfonic acid-functionalized SWNTs, the short SWNTs comprising carboxylic acid (-COOH) groups on the ends and benzene sulfonic acid groups on their sidewalls. The copolymerization was carried out in a reaction mixture comprising 356 mg of the short benzenesulfonic acid-functionalized SWNTs, 2.0 g of a PPA solution of PBO 45 mer (comprising 250 mg of PBO 45 mer), 15 g MSA, and 1.5 g $P_2O_5$. The copolymerization

was allowed to proceed at a temperature of 150°C for a period of 3 days to yield a sidewall-functionalized SWNT/PBO 45 mer block copolymer, as depicted in Scheme 10.

EXAMPLE 10

This Example serves to illustrate Raman spectroscopic analysis, at a variety of excitation wavelengths, for a series of SWNT/PBO 45 mer block copolymers prepared under a variety of conditions.

Table 2 details a variety of SWNT/PBO 45 mer block copolymers prepared via copolymerization of short SWNTs and PBO 45 mers carried out in a mixed solvent of PPA/MSA with $P_2O_5$ for 3 days.

Table 2

| No. | Wt ratio of PBO 45 mers and short SWNTs | Molar ratio of PBO 45 mers to short SWNTs | Wt ratio of PPA and MSA | Concentration (wt%) | | |
|---|---|---|---|---|---|---|
| | | | | PBO/SWNTs [a] | PBO | SWNTs [a] |
| 6 | 50/50 | 11 | 10/90 | 2.6 | 1.3 | 1.3 |
| 7 | 50/50 [b] | 11 | 10/90 | 2.6 | 1.3 | 113 |
| 8 | 90/10 [b] | 100 | 33/67 | 4.7 | 4.2 | 0.5 |

a: Calculated based on SWNTs weight for benzenesulfonic acid short SWNTs. b: Benzenesulfonic acid functionalized short SWNTs were used.

Various areas of the copolymer films were examined with 514 nm, 633 nm and 780 nm excitation. FIGURE 15 depicts Raman spectroscopic analysis (633 nm excitation) of SWNT/PBO 45 mer copolymer film, wherein trace (a) depicts copolymerized product from PBO 45 mers and benzenesulfonic acid-functionalized short SWNTs (No. 7, Table 2), and wherein trace (b) depicts copolymerized product from PBO 45 mers and short SWNTs (No. 6, Table 2). FIGURE 16 depicts Raman spectroscopic analysis (780 nm excitation) of SWNT/PBO 45 mer copolymer film, wherein trace (a) depicts copolymerized product from PBO 45 mers and benzenesulfonic acid-functionalized short SWNTs (No. 7, Table 2), and wherein trace (b) depicts copolymerized product from PBO 45 mers and short SWNTs (No. 6, Table 2). FIGURE 17 depicts Raman spectroscopic analysis (514 nm excitation) of SWNT/PBO 45 mer copolymer film, wherein trace (a) depicts copolymerized product from PBO 45 mers and benzenesulfonic acid-functionalized short SWNTs (No. 7, Table 2), and wherein trace (b) depicts copolymerized product from PBO 45 mers and short SWNTs (No. 6, Table 2).

Regarding FIGURE 16, both traces (a) and (b) show that the copolymers do indeed exhibit the expected presence of the SWNTs. However, trace (a) shows an expected larger D-band to G-band ratio than trace (b), due to the arylsulfonic acid sidewall functionalization, further confirming that the sidewall functionalization survives the copolymerization conditions.

Regarding FIGURE 17, both trace (a) and trace (b) show that the copolymers do indeed exhibit the expected presence of the SWNTs. Again, however, trace (a) shows the expected larger D-band to G-band ratio than trace (b), due to the arylsulfonic acid sidewall functionalization, further confirming that the sidewall functionalization survives the copolymerization conditions. Note that the intensity of trace (a) is depressed because of the lack of resonant Raman enhancement seen in functionalized SWNTs, and also because it is further diluted with respect to there being a longer PBO (45 mer) segment.

EXAMPLE 11

This Example serves to illustrate a conventional dry-jet wet spinning process useful for spinning fibers of nanotube block copolymers, in accordance with some embodiments of the present invention.

Referring to FIGURE 18, such a spinning process typically involves a spinning apparatus 1800 coupled with the steps of: (a) degassing of a nanotube block copolymer solution; (b) extrusion of the degassed copolymer solution through a spinneret 1804 to form a fiber, (c) coagulation of the fiber in a coagulation bath 1801 (directed by idle roll 1803); take-up of the fiber by take-up drum 1802; (d) washing the spun fiber; (e) drying the spun fiber, and (f) various optional post treatments.

FIGURES 19A and 19B are scanning electron microscopy images contrasting a PBO 45 mer fiber (FIG. 19A) with a copolymer (No. 8, Table 2) of PBO 45 mers and benzenesulfonic acid-functionalized short SWNTs at the weight ratio of 90/10 (FIG. 19B).

In the above or other embodiments, to enhance or modulate the properties of the fibers produced, the nanotube block copolymers can be blended with PBO homopolymers (or other aromatic polymer), as depicted in FIGURE 20.

EXAMPLE 12

This Example serves to illustrate the copolymerization of short SWNTs and poly(*p*-phenylene terephthalamide) (PPTA).

First, PPTA, comprising amine groups at both ends, is synthesized as shown in Scheme 11 (FIG. 21). Then, as depicted in Scheme 12 (FIG. 22), this PPTA is then copolymerized with short SWNTs in a reaction mixture comprising NMP, CaCl2, and triphenyl phosphate/pyridine (condensate reagent).

## Claims

**1.** A block copolymer comprising:

a) a first block material comprising short carbon nanotubes (CNTs); and
b) a second block material comprising an aromatic polyamide polymer.

**2.** The block copolymer of claim 1, wherein the block copolymer comprises first polymer blocks, wherein a first block is a short single wall carbon-nanotube (SWNT), and second polymer blocks, wherein a second block is an aromatic polyamide.

**3.** The block copolymer of claim 2, wherein the short single-wall carbon nanotubes have lengths that range from about 5 nm to about 100 nm.

**4.** The block copolymer of claim 2 or claim 3, wherein the short single-wall carbon nanotubes have aspect ratios that range from about 5 about 100.

**5.** The block copolymer of any preceding claim, wherein said block copolymer is selected from the group consisting of di-block copolymers, tri-block copolymers, random-block copolymers, and combinations thereof.

**6.** The block copolymer of any preceding claim, wherein the aromatic polyamide has the formula:

$$-[\text{-NH-Ar-NH-CO-Ar-CO-}]_n\text{- or -}[\text{NH-Ar-CO-}]_n\text{-,}$$

wherein n is the number of repeat units and Ar is an aromatic unit.

**7.** The block copolymer of claim 6 wherein -Ar is selected from 1,4-phenylene; 4,4'-biphenylene; 2,6-naphthylane; 1,5-naphthylene; N,N'-piperazine; 1,3,4 - oxadiazol; phenylbenzimide; 1,4-xylylene; 2,5-pyridylene; and combinations thereof.

**8.** The block copolymer of any preceding claim, wherein the aromatic polyamide polymer is poly(p-phenylene terephthalamide) (PPTA).

**9.** The block copolymer of any preceding claim, wherein the aromatic polyamide polymer comprises a number of repeat units, n, that ranges from about 2 to about 2000.

**10.** The block copolymer of any of claims 1 to 8, wherein the aromatic polyamide polymer comprises a number of repeat units, n, that ranges from about 5 to about 50.

**11.** The block copolymer of any of claims 1 to 8, wherein the aromatic polyamide polymer comprises a number of repeat units, n, that ranges from about 5 to about 30.

**12.** The block copolymer of claim 2 or of any of claims 3 to 11 when dependent on claim 2, wherein the block copolymer has a SWNT/aromatic polyamide composition that ranges from about 1/99 SWNT/aromatic polyamide (wt/wt%) to about 99/1 SWNT/aromatic polyamide (wt/wt%).

**13.** A method comprising copolymerizing a first block material comprising functionalized short single-wall carbon nanotubes (SWNTs) with a second block material comprising aromatic polyamide polymers comprising amide-forming moieties on their ends to form a block copolymer material.

**14.** The method of claim 13, wherein the functionalized short SWNTs are coupled to the aromatic polyamide polymers via a condensation reaction.

**15.** The method of claim 13 or claim 14, wherein the functionalized short single-wall carbon nanotubes are functionalized with chemical moieties selected from carboxylic acid groups, acyl chloride groups, and combinations thereof; and wherein the chemical moieties are attached to the functionalized short single-wall carbon nanotubes in a manner selected from end-attached, sidewall attached, and combinations thereof.

**16.** The method of any of claims 13 to 15, wherein the copolymerizing is carried out in an aprotic solvent, or strong mineral acid. capable of dissolving both reactants without degradation of either of said reactant.

**17.** The method of claim 16, wherein the copolymerizing is carried out in an aprotic solvent selected from NMP, DMAc, DMF, DMSO, DMI, and combinations thereof.

**18.** The method of any of claims 13 to 17 which further comprises any of the features recited in one or a permitted combination of claims 3 to 12.

**19.** The method of any of claims 13 to 18, wherein the amide-forming moieties on the ends of said second block material comprising aromatic polyamide polymers comprise an amine moiety.

**20.** The method of any of claims 13 to 19 further comprising spinning the block copolymer material into a fiber.

**21.** The method of any of claims 13 to 19 further comprising casting the block copolymer material into a film.

**22.** The method of any of claims 13 to 19 further comprising shaping the block copolymer material into a particular shape.

**23.** A method of any of claims 13 to 22 which further comprises subjecting the product of the method to one or more additional processes.

**24.** A fiber comprising the block copolymer of any of claims 1 to 12.

**25.** A film comprising the block copolymer of any of claims 1 to 12.

**26.** A composition comprising the block copolymer of any of claims 1 to 12 or a blend comprising such a block copolymer and its homopolymer.

**27.** A use of the fibre of claim 24 as a component in a composite.

**28.** A solution of a block copolymer of any of claims 1 to 12 and a solvent, wherein the solvent is, for example, an aprotic solvent or a mineral acid.

**29.** A polymer comprising first polymer or oligomer chains of one type of polymer that are connected with second polymer or oligomer chains of one other type of polymers, wherein:

said one type of polymer is a polyamide; and
said one other type of polymer is a carbon nanotube,

and wherein said second chains optionally include more than one type of polymer.

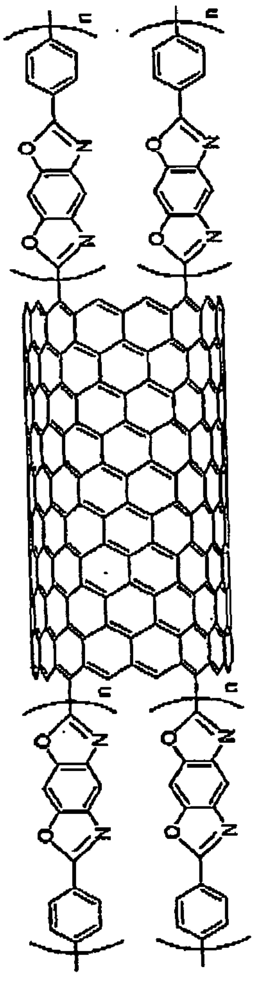

Fig. 1

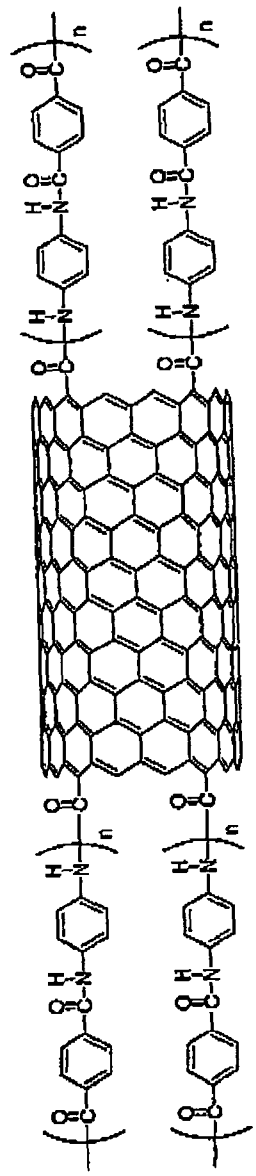

Fig. 2

Scheme 4

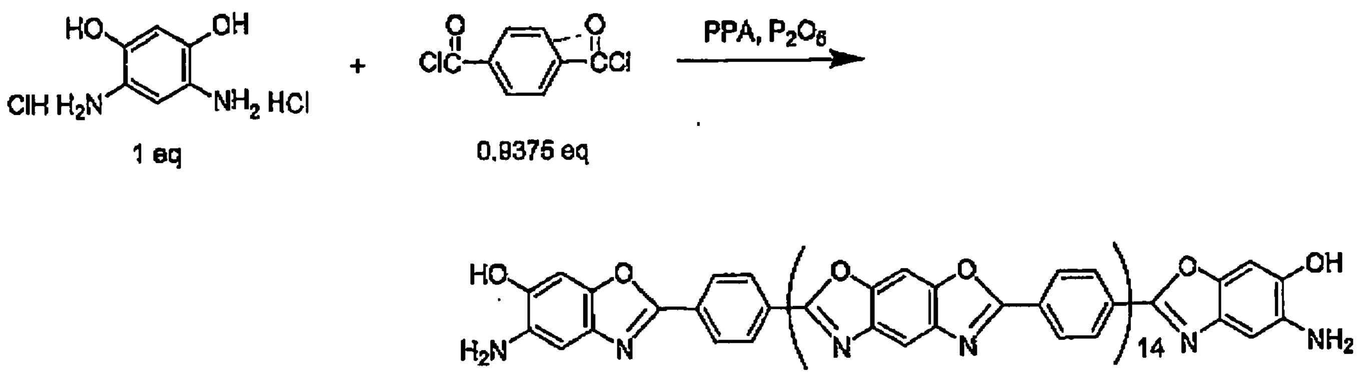


*p*-Phenylene benzobisoxazole oligomer

*Fig. 3*

Scheme 5

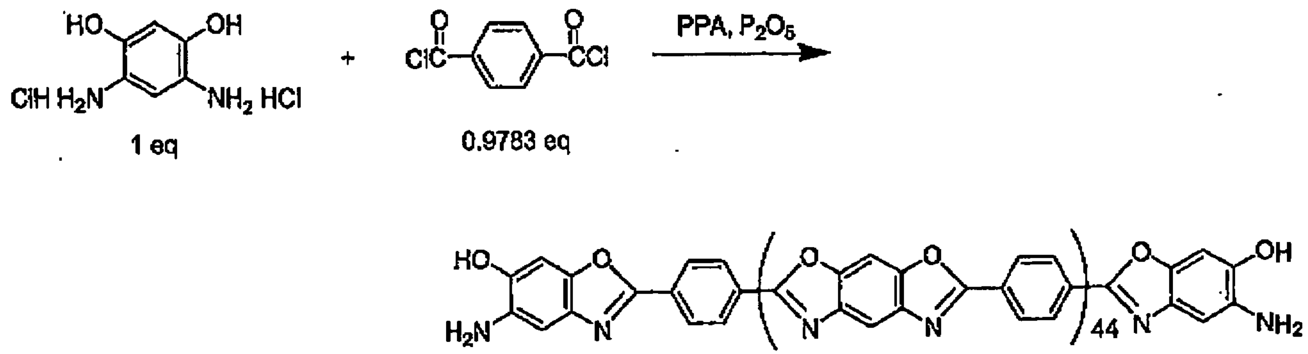


*p*-Phenylene benzobisoxazole oligomer

***Fig. 4***

Scheme 6

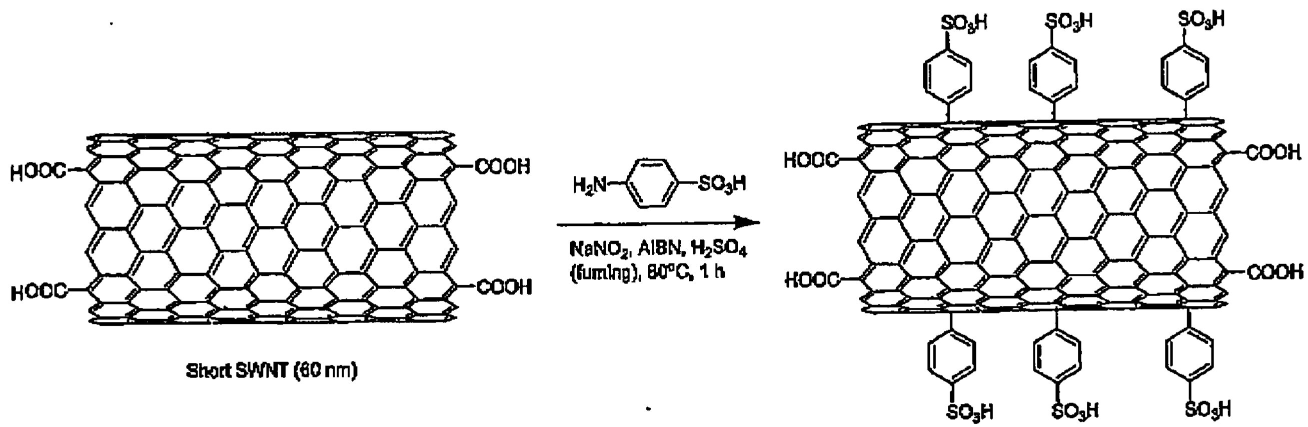


Fig. 5

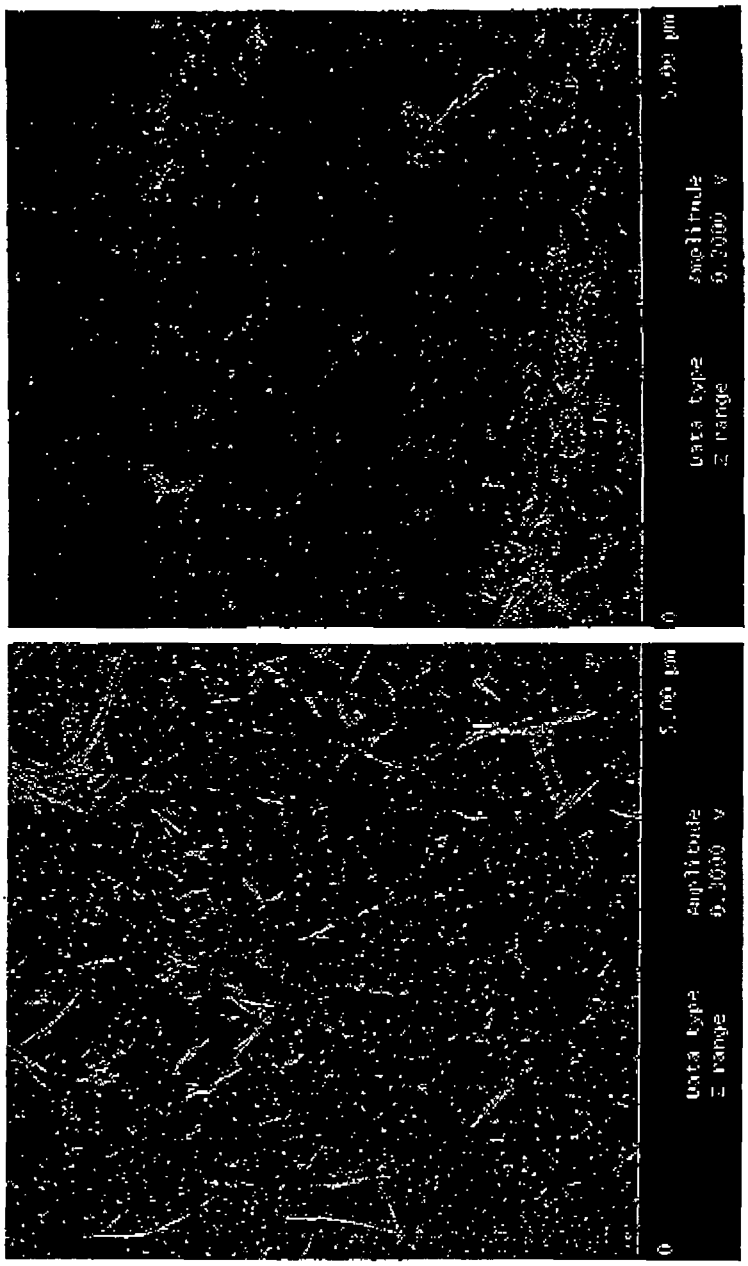


Fig. 6

## Scheme 7

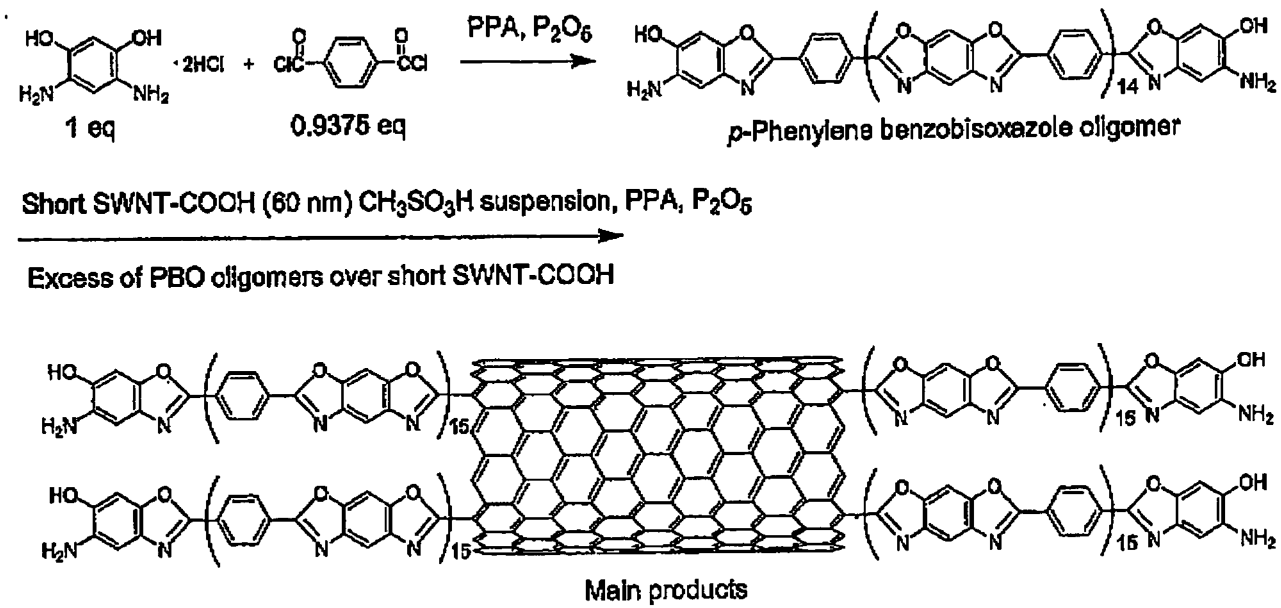


*p*-Phenylene benzobisoxazole oligomer

Main products

**Fig. 7**

Scheme 8

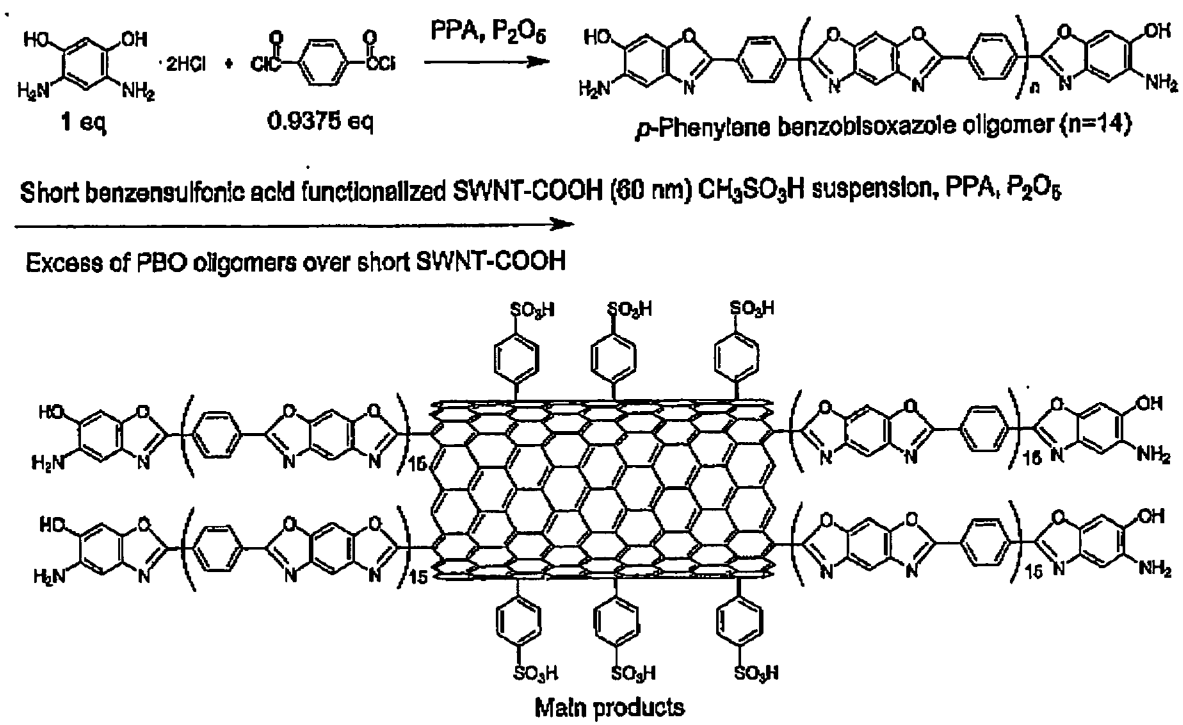


*Fig. 8*

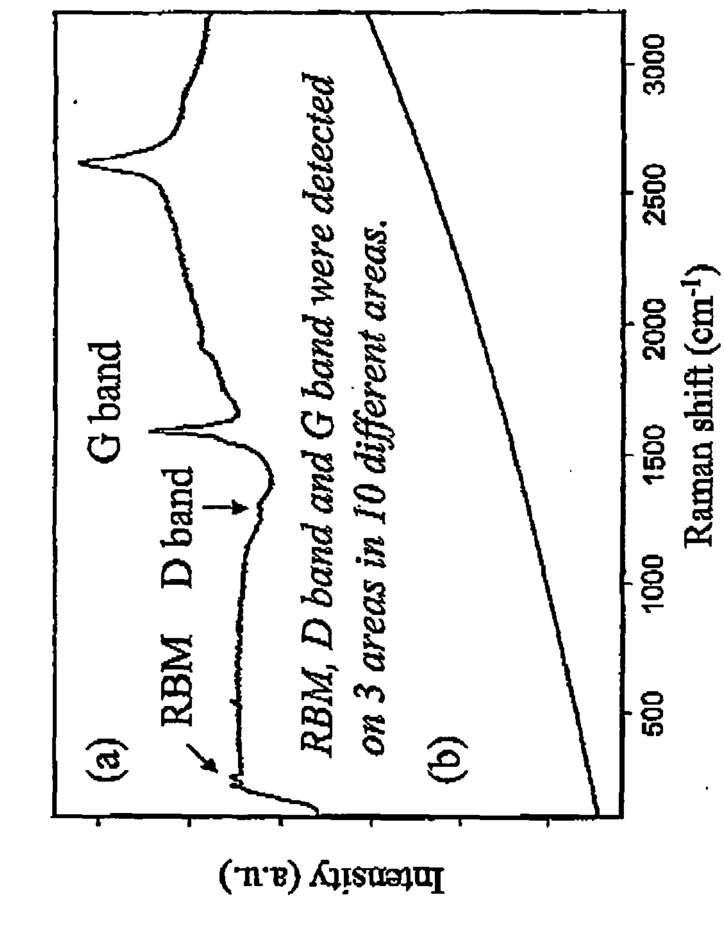
(a)
RBM
D band
G band
RBM, D band and G band were detected on 3 areas in 10 different areas.
(b)
Intensity (a.u.)
500
1000
1500
2000
2500
3000
Raman shift ($cm^{-1}$)

*Fig. 9*

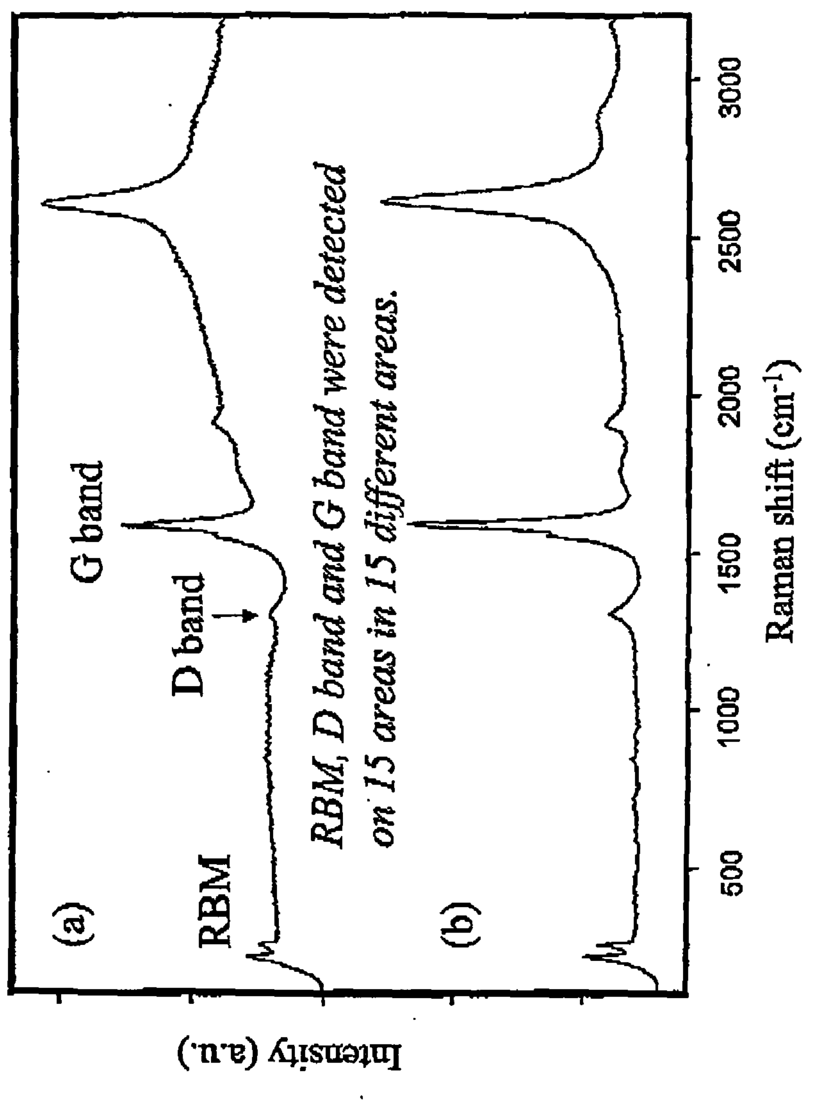
(a)
RBM
D band
G band
(b)
RBM, D band and G band were detected
on 15 areas in 15 different areas.
Intensity (a.u.)
500
1000
1500
2000
2500
3000
Raman shift (cm-1)

*Fig. 10*

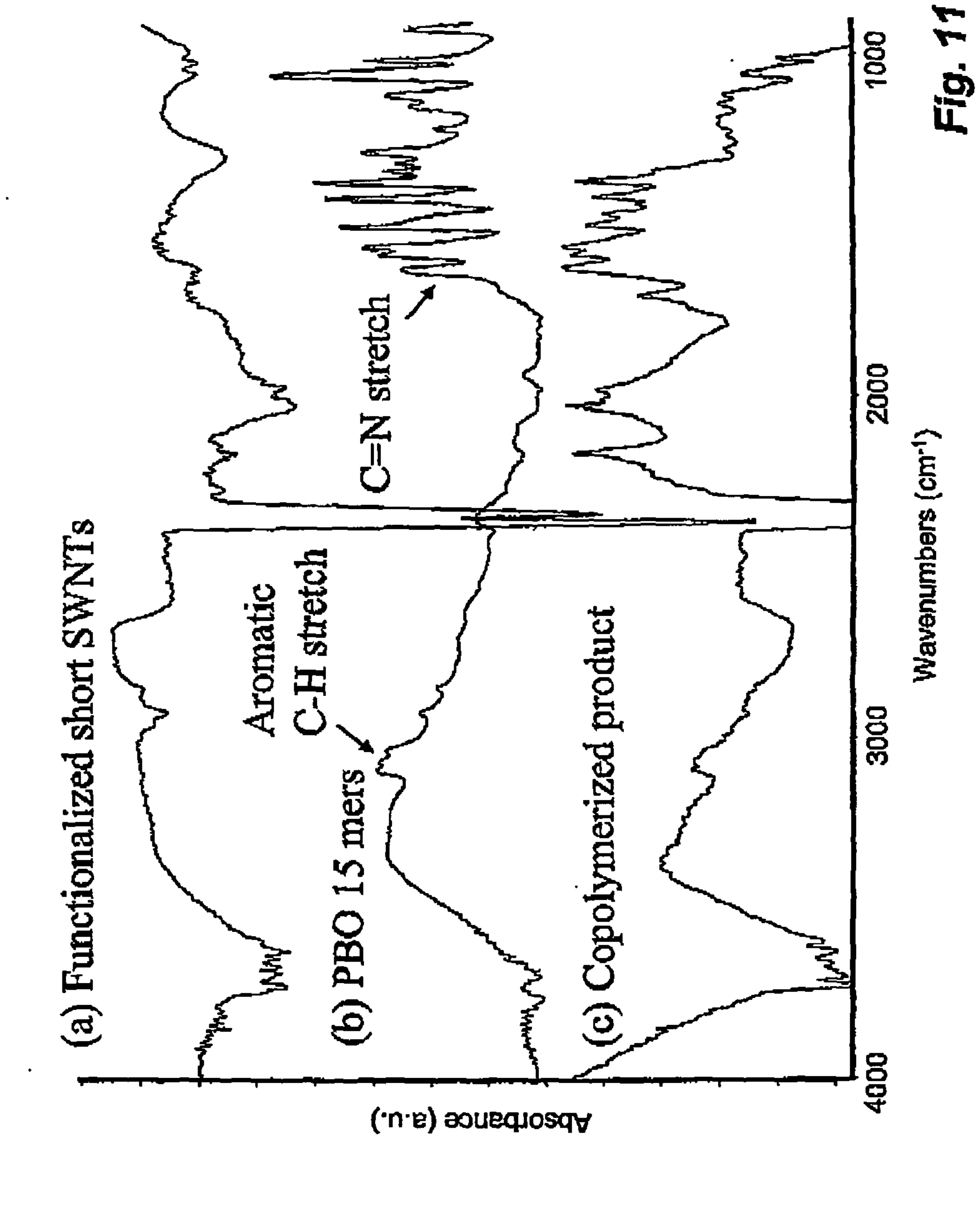
(a) Functionalized short SWNTs
(b) PBO 15 mers
Aromatic
C-H stretch
C=N stretch
(c) Copolymerized product
Absorbance (a.u.)
Wavenumbers (cm-1)
4000
3000
2000
1000

*Fig. 11*

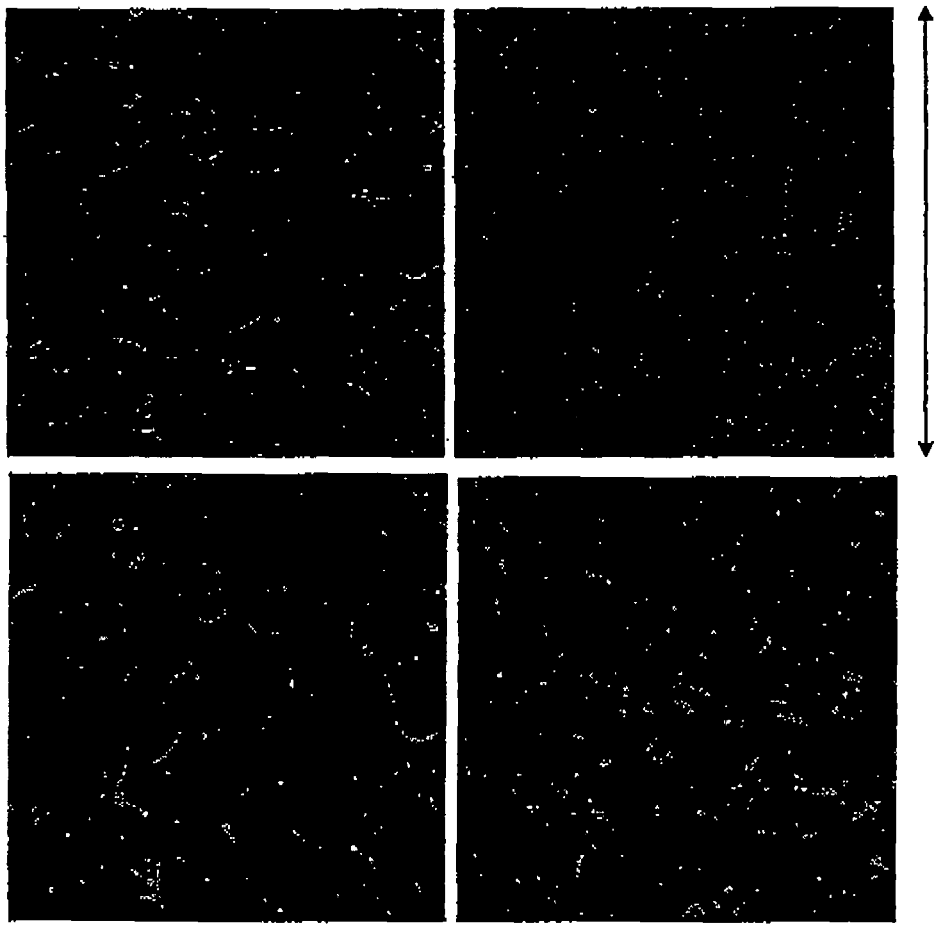


Fig. 12

Scheme 9

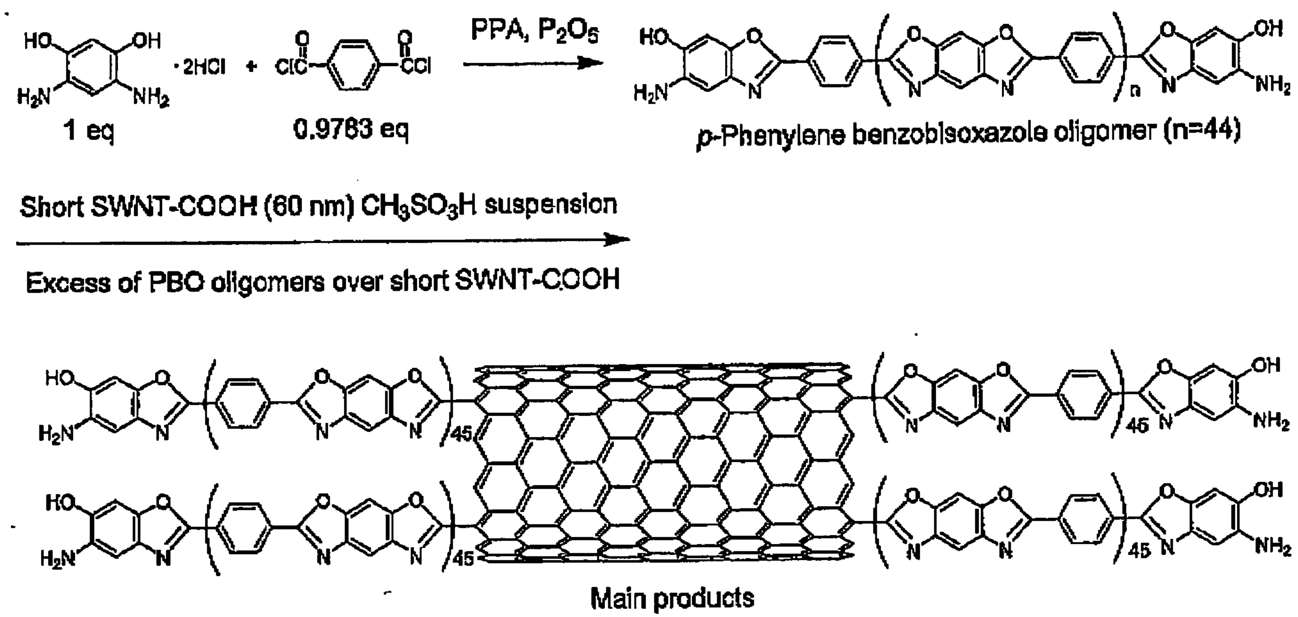


*Fig. 13*

Scheme 10

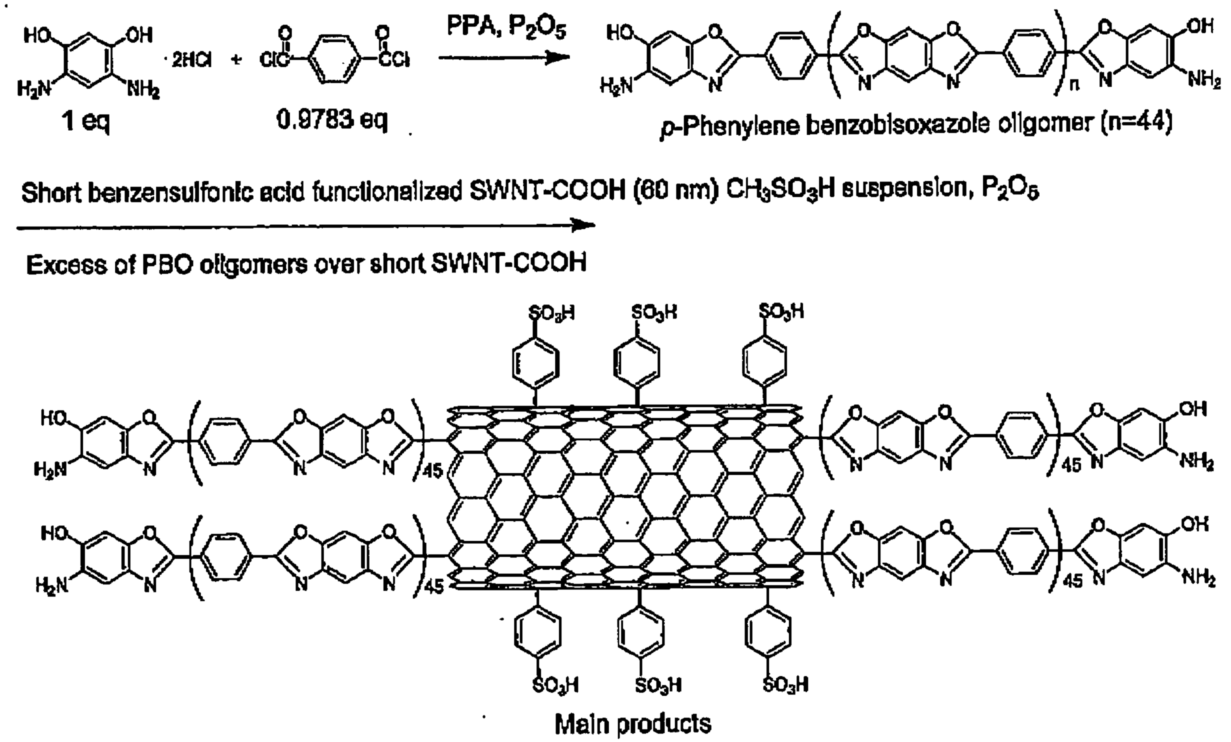


*Fig. 14*

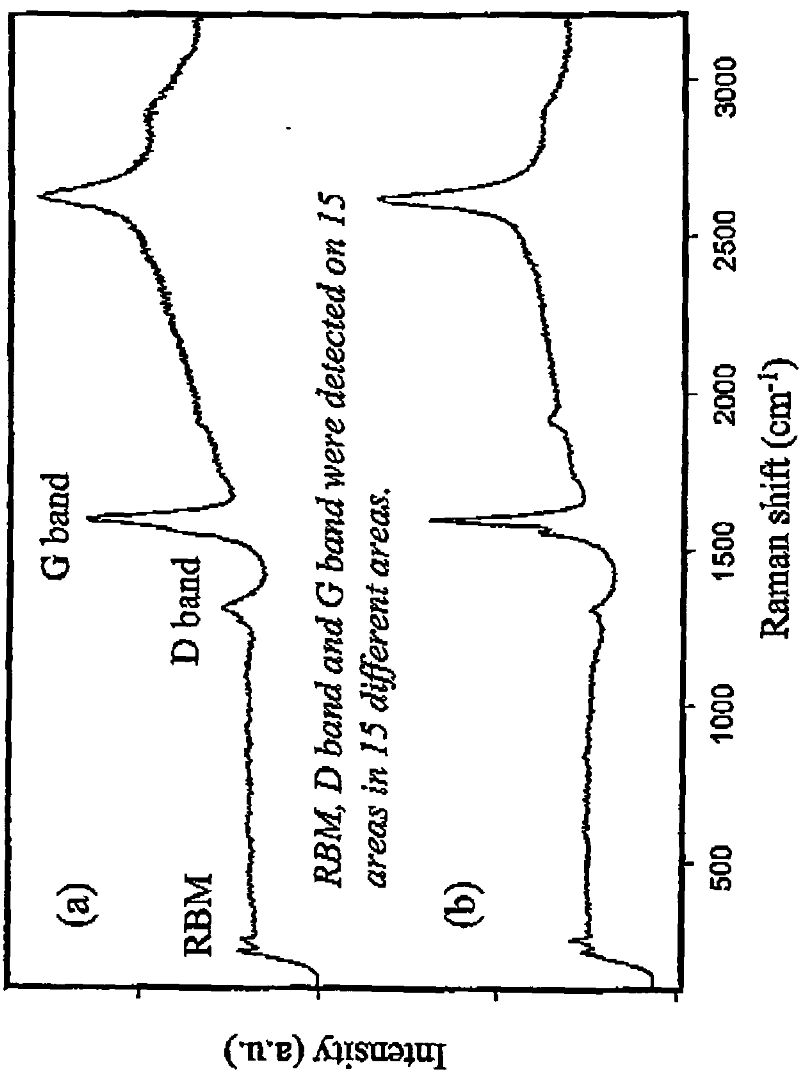
(a)
RBM
D band
G band
RBM, D band and G band were detected on 15 areas in 15 different areas.
(b)
500
1000
1500
2000
2500
3000
Raman shift (cm-1)
Intensity (a.u.)

*Fig. 15*

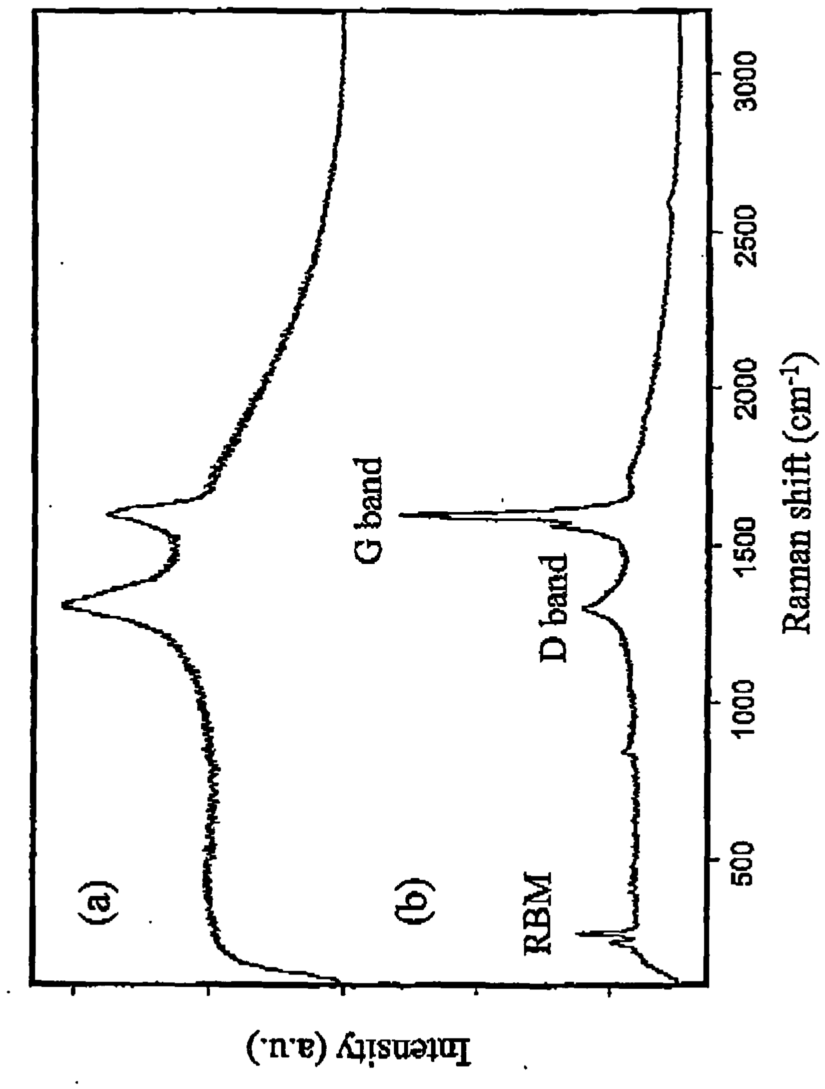
Intensity (a.u.)
Raman shift (cm-1)
(a)
(b)
RBM
D band
G band
500
1000
1500
2000
2500
3000

Fig. 16

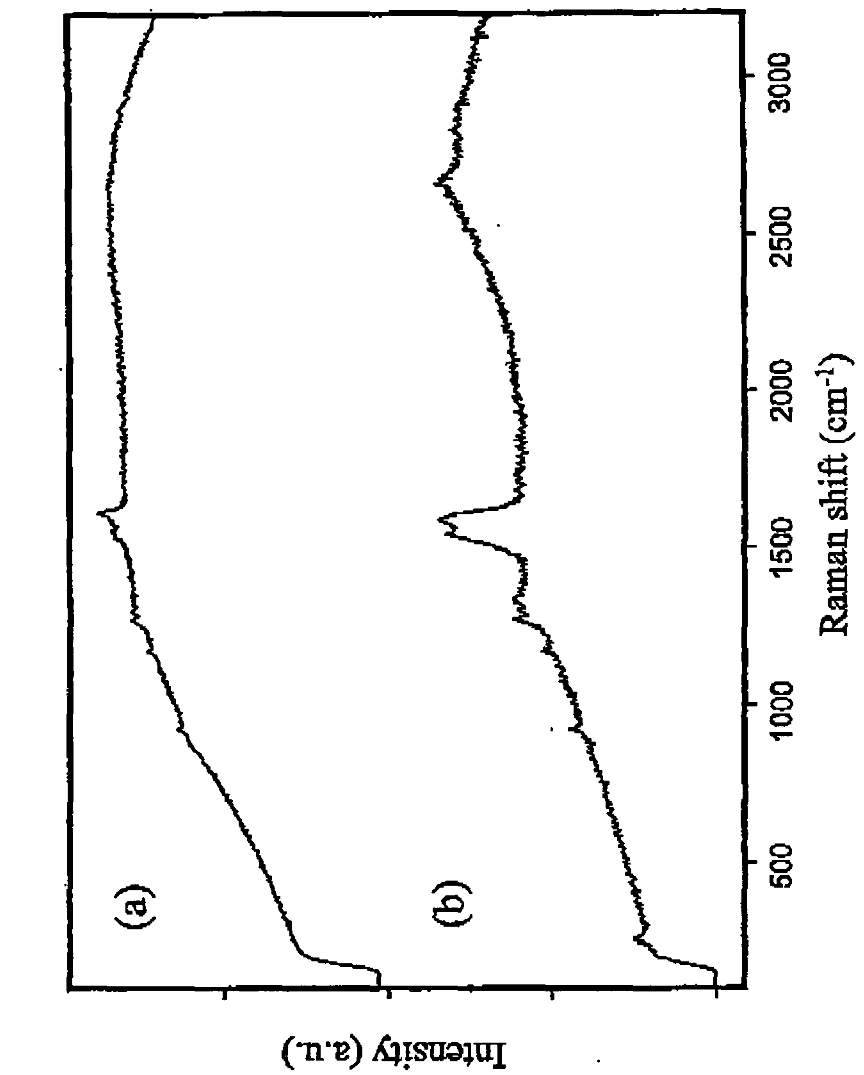


*Fig. 17*

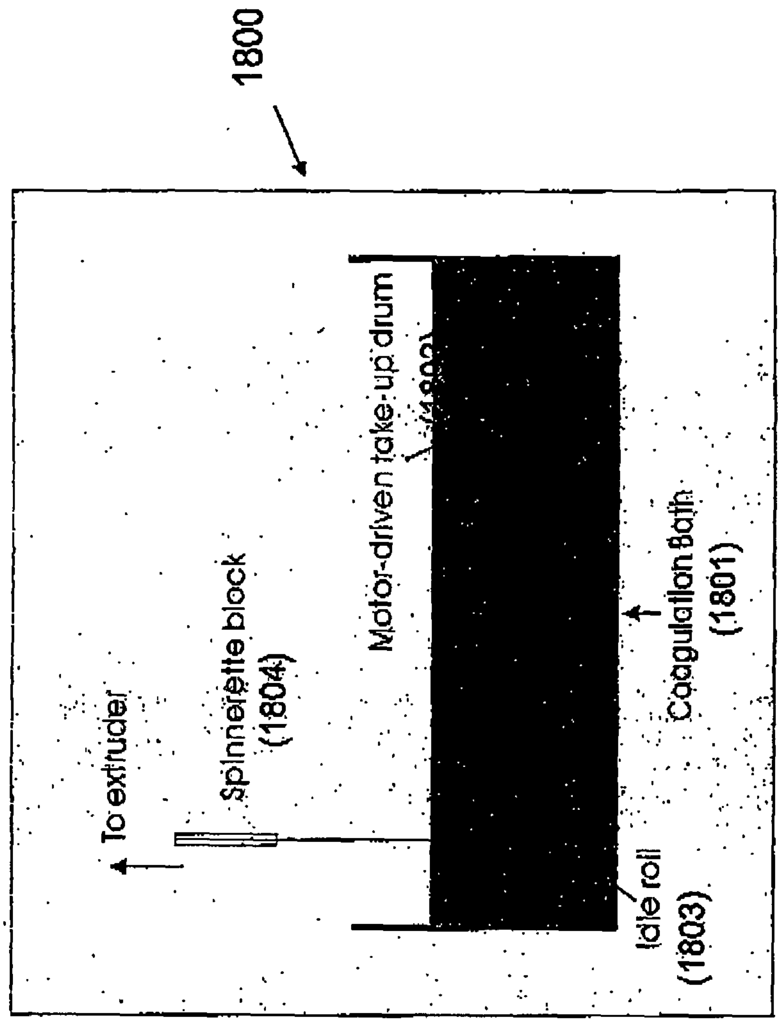
1800
To extruder
Spinnerette block
(1804)
Motor-driven take-up drum
Coagulation Bath
(1801)
Idle roll
(1803)

*Fig. 18*

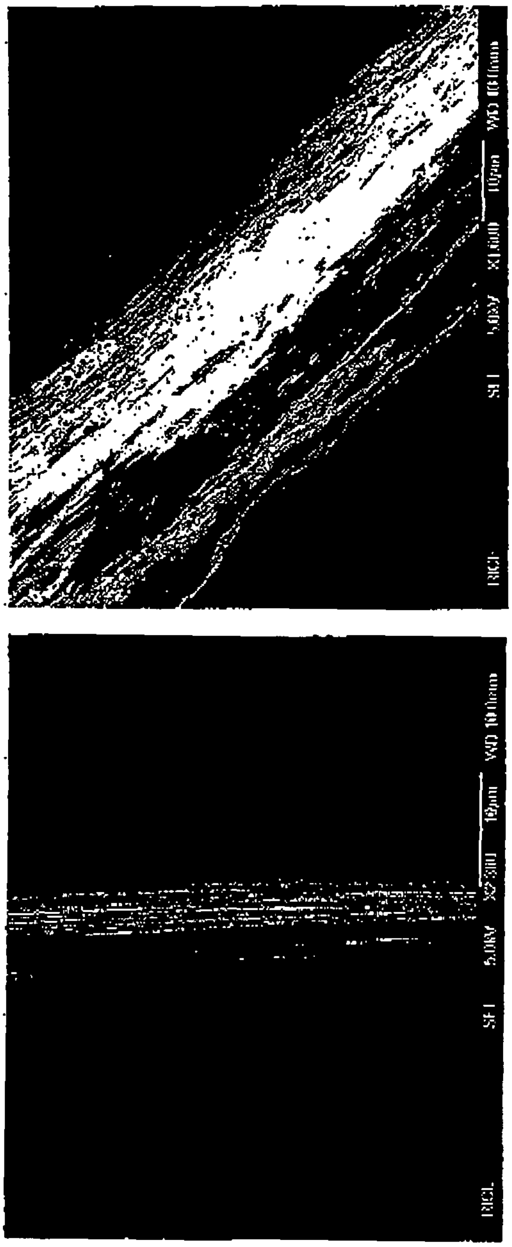

Fig. 19

*Blending*

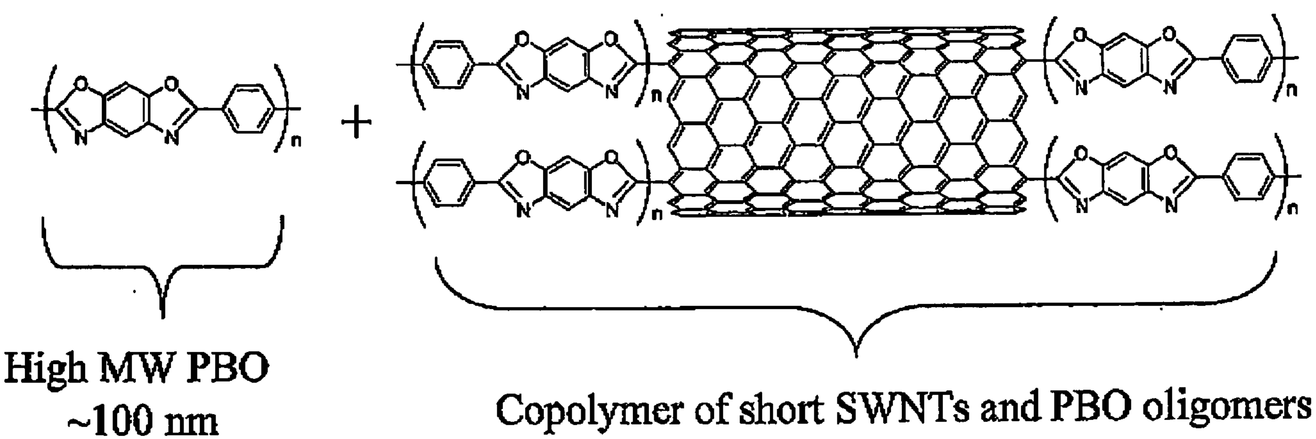

High MW PBO
~100 nm
(better spinnability)

Copolymer of short SWNTs and PBO oligomers
~100 nm

**Fig. 20**

Scheme 11

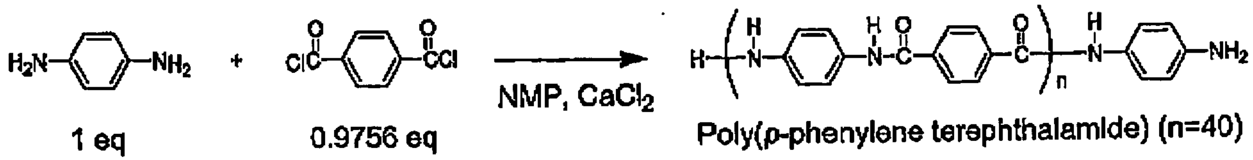


1 eq

0.9756 eq

Poly(p-phenylene terephthalamide) (n=40)

*Fig. 21*

Scheme 12

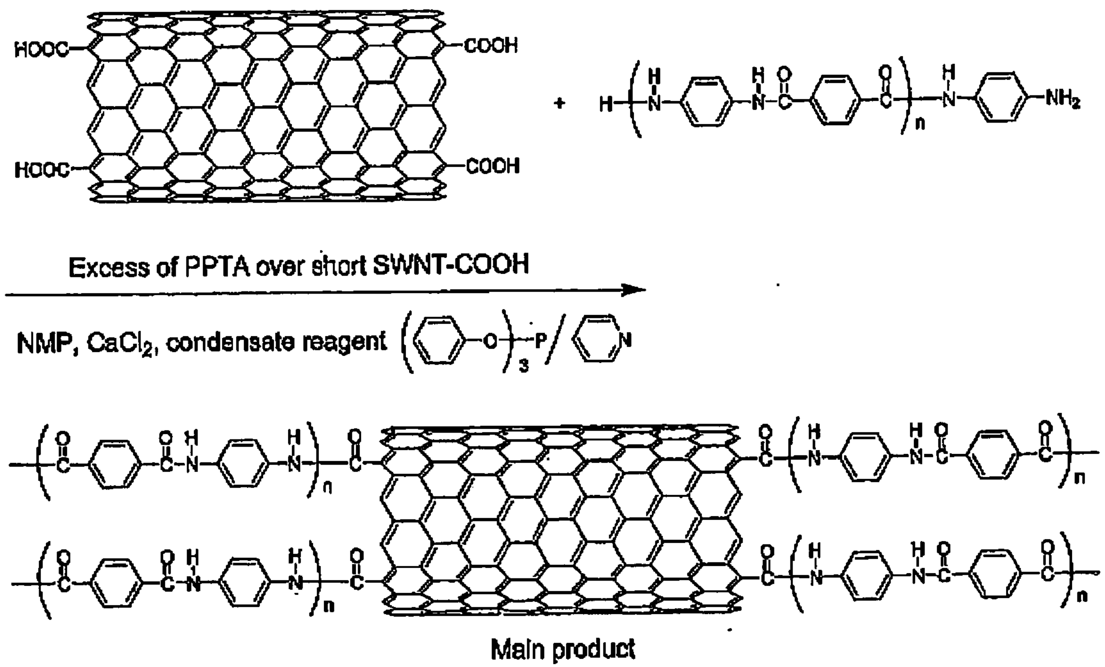


*Fig. 22*

European Patent Office

# EUROPEAN SEARCH REPORT

Application Number
EP 07 25 0107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 426 134 B1 (LAVIN JOHN GERARD [US] ET AL) 30 July 2002 (2002-07-30)<br>* column 4, line 1 - line 33 *<br>* column 6, line 4 - line 31 *<br>* claims; examples *<br>----- | 1-29 | INV.<br>C08G81/00<br>C08G83/00<br>C01B31/02<br>C08G69/32 |
| A | US 2005/171281 A1 (HWANG WEN-FANG [US] ET AL) 4 August 2005 (2005-08-04)<br>* claims; examples *<br>----- | 1-29 | |
| A | EP 1 574 551 A (TEIJIN LTD [JP]) 14 September 2005 (2005-09-14)<br>* claims; examples *<br>----- | 1-29 | |
| A | WO 03/038837 A (HYPERION CATALYSIS INT [US]) 8 May 2003 (2003-05-08)<br>* claims; examples *<br>----- | 1-29 | |

TECHNICAL FIELDS SEARCHED (IPC)

C08G

The present search report has been drawn up for all claims

1

| Place of search | Date of completion of the search | Examiner |
|---|---|---|
| Munich | 9 May 2007 | Vaccaro, Eleonora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 07 25 0107

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2007

| Patent document cited in search report | Publication date | Patent family member(s) | Publication date |
|---|---|---|---|
| US 6426134 B1 | 30-07-2002 | NONE | |
| US 2005171281 A1 | 04-08-2005 | NONE | |
| EP 1574551 A | 14-09-2005 | AU 2003289145 A1 | 23-06-2004 |
| | | CA 2508577 A1 | 17-06-2004 |
| | | CN 1720295 A | 11-01-2006 |
| | | WO 2004050764 A1 | 17-06-2004 |
| | | KR 20050085337 A | 29-08-2005 |
| | | US 2006188718 A1 | 24-08-2006 |
| WO 03038837 A | 08-05-2003 | CA 2465032 A1 | 08-05-2003 |
| | | CN 1610953 A | 27-04-2005 |
| | | EP 1449222 A1 | 25-08-2004 |
| | | JP 2005508067 T | 24-03-2005 |
| | | KR 20050040821 A | 03-05-2005 |
| | | MX PA04003996 A | 23-07-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0017101 A
- WO 2005090233 A
- WO 2005012171 A
- WO 2005028740 A
- US 05109677 W
- WO 2005113434 A

### Non-patent literature cited in the description


- **LIJIMA.** *Nature,* 1991, vol. 354, 56-58
- **LIJIMA et al.** *Nature,* 1993, vol. 363, 603-605
- **BETHUNE et al.** *Nature,* 1993, vol. 363, 605-607
- **BAUGHMAN et al.** *Science,* 2002, vol. 297, 787-792
- **MITCHELL et al.** *Macromolecules,* 2002, vol. 35, 8825-8830
- **ZHU et al.** *Nano. Lett.,* 2003, vol. 3, 1107-1113
- **VIGOLO et al.** *Science,* 2000, vol. 290, 1331-1334
- **ZHOU et al.** *J. Appl. Phys.,* 2004, vol. 95, 649-655
- **ERICSON et al.** *Science,* 2004, vol. 305, 1447-1450
- **CHIANG et al.** *J. Phys. Chem. B,* 2001, vol. 105, 1157-1161
- **CHIANG et al.** *J. Phys. Chem. B,* 2001, vol. 105, 8297-8301
- **LIU et al.** *Science,* 1998, vol. 280, 1253-1256
- **GU et al.** *Nano Left.,* 2002, vol. 2, 1009-1013
- **LIU et al.** *Science,* 1998, vol. 280, 1263-1256
- **CHEN et al.** *Science,* 1998, vol. 282, 95-98
- **ERICSON et al.** *Science,* 2004, vol. 304, 1447-1450